# EUROPEAN PATENT APPLICATION

(11) **EP 1 411 453 A1**
(43) Date of publication of application: **21.04.2004**
(21) Application number: 02703962.7
(22) Date of filing: 11.03.2002
(51) Int. Cl.: G06F 17/60

(54) **METHOD AND SYSTEM FOR EVALUATING INDIVIDUAL/GROUP CONSTITUTING ORGANIZATION**

(30) Priority: 13.03.2001 JP 2001071276
(71) Applicant: Annex Systems Incorporated, Tokyo 107-0061 (JP); Tamatsu, Masaharu, Tama-shi, Tokyo 206-0023 (JP)
(72) Inventor: TAMATSU, Masaharu, Tama-shi, Tokyo 206-0023 (JP); KUWABARA, Noriyuki, Minato-ku, Tokyo 107-0061 (JP)
(74) Representative: Berger, Helmut
(86) International application number: PCT/JP2002/002253
(87) International publication number: WO 2002/073488

(57) **Abstract**

This method of evaluation provides means of accurately evaluating individuals and groups within an organization on the basis of numerical data and for thereby instituting genuine meritocracy within the organization. The activities of individuals and/or groups comprised of one or more individuals within the organization are quantified as billables or by applying tools of accounting and the individuals and/or groups comprised of one or more individuals evaluated on the basis of computer output provided that quantification as input. Use of this method of evaluation and such quantification of individual performance enables objective and fair evaluation of the individual. Application of this method and system further allows determination of the pay, retirement or severance pay, and other remuneration of individuals.

## Description

A Method of Evaluation and System of Evaluation of Individuals and/or Groups as Constituent Members of an Organization, and a Profit and Loss Management System

### FIELD OF THE INVENTION

This invention relates to the field of methods of evaluation and systems for evaluating individuals and/or groups as constituent members of an organization, and to systems of profit and loss management. More particularly, this invention relates to the field of methods of evaluation and systems of evaluation of individuals and/or groups comprising one or more individuals in an organization by means of the quantification of internally and externally directed organization activities as accounting transactions or as billables and the calculation of member and/or group profit and loss, and assets and liabilities, on the basis of the quantification of those activities.

This invention relates also to the field of methods of evaluation and systems of evaluation and systems of profit and loss management that have as their objective the motivation of the organization and the achievement within it of genuine meritocracy by means of transparency in the evaluation of individuals and/or groups comprising one or more individuals in the organization and the elimination of inconsistent subjective understandings of the evaluation process held by evaluators and evaluees within the organization.

### BACKGROUND OF THE INVENTION

Conventional approaches to the evaluation of groups and individuals, or members, in a given organization have relied primarily on rating methods and target, or objective, management systems. The outcomes of these evaluations have determined individual bonuses and pay rises.

Rating systems define a variety of constituent factors, such as the extent or degree of task achievement or on-the-job attitude, to be evaluated for the period under review, assigning to one factor a rating weight of, say, one to ten points and to another a rating weight of, say, two to twenty points and arriving at an overall evaluation by means of the sum of those points. Other factors commonly used in such rating systems include the extent or degree of job performance, capability, judgment exhibited and coordination or cooperation with other organizational functions or constituents.

Management of objectives, a relatively new method, has been adopted to compensate for the shortcomings of rating systems. This consists of individuals assigning themselves at the outset of a given period an objective or objectives to be achieved during that period and agreeing these in consultation with their superiors, and subsequently those individuals and their superiors together evaluating at the close of that period the extent or degree to which those individuals achieved those objectives and arriving at individual evaluations on that basis.

Conventional methods for determining salaries and wages have been fundamentally accumulative: the outcome of the rating of an individual has determined any raise awarded him over his salary or wage the previous year. Or, in a system of graded pay schedules, in which the individual's employment grade has determined his pay, that individual's employment grade is determined according to some means of evaluation. Meanwhile, systems that compensate individuals with annual salaries determine those salaries in frameworks like those of management of objectives, evaluating the previous year's performance and so determining the coming year's salary, thus perpetuating the shortcomings of these systems of management of objectives.

Retirement pay and severance pay us are generally determined as the multiplied product of years of employment and remuneration at time of retirement or severance, and payment made according to such formulae.

Furthermore, strikingly good and strikingly poor evaluations for some given evaluation period have, in conventional methods of evaluation, affected evaluations in subsequent evaluation periods.

The conventional methods of evaluation of the individuals and groups making up an organization make it difficult to ascertain to what extent individuals and small groups contribute to the organization and suffer the shortcoming of susceptibility to arbitrariness in evaluations performed by superiors in the organization.

Furthermore, work activities have become increasingly informed by information technology in recent years, turning jobs themselves into so many black boxes, and as on-the-job circumstances become ever more difficult to ascertain with the adoption of telecommuting, discretionary labor and flextime systems, these conventional methods of evaluation suffer from the shortcoming that it is ever more difficult to conduct evaluations that are reasonable and fair.

Consider, for example, a person tapping enthusiastically at a computer keyboard from morning to night. He might appear to be enthusiastically at work, but what is actually going on? He may indeed be an enthusiastic worker, or he might only be doing his best to recover a file he himself carelessly deleted the night previously, or he might be enjoying a private email exchange of no more than personal concern.

Since evaluations are expressed as scores in rating systems, at first glance they seem to be objective, but scoring of such constituent factors as the extent or degree of job completion have in fact tended to depend on the subjective view of an evaluating superior. It has also been at issue whether the constituent factors of rating systems are correctly selected and whether they are correctly weighted.

Furthermore, evaluations cannot be held to be objective when, as is often the case, an evaluating superior conducts the evaluations of a large number of individuals while failing to apprehend fully their performance as individual workers and assigning scores on the basis of partial impressions alone. Whereas the primary task of a for-profit organization is to earn profits, evaluations of individuals and organizations within such organizations still make wide use of such marginal factors as superficial on-the-job attitude (e.g. whether an employee is punctual or demonstrates obedience) and speaking up in a loud, responsive voice.

Furthermore, evaluees tend to cluster in the middle of rating system ranges, making it difficult to reward good workers sufficiently. Given five-grade evaluations of one to five, for example, there is a tendency for most people to fall under 3 and almost none under 1 or 5.

Management of objective systems, which, as described above, evaluate achievement on the basis of known targets, seem highly objective in comparison with rating systems, but have also exhibited many problems.

Since the major factor of evaluations in such systems is the achievement of previously defined objectives, they provide individuals with an incentive to select objectives that are rather easily achieved. Nor is it readily evident in many cases how the objectives selected conform with the objectives of the organization; it is not clear what profit derives from the achievement of objectives thus selected.

When individuals report, at the end of an evaluation period, achievement rates of 100% and 150%, their evaluating superiors spend considerable amounts of time disputing the validity of these reports.

In short, although conventional methods dress up as objective evaluations,they are infactsubjective evaluations. In almost all respects they fail to make clear exactly how such quantified abilities as understanding, judgment and cooperation are manifested and how they are related to profits. Nor is either of these systems capable of determining with any certainty whether individuals working in different organizational sub-units have made greater or lesser contributions to the organization as a whole. However, as circumstances make it ever more difficult for non-meritocratic organizations to emerge as winners in global competition, it becomes essential for them to conduct objective evaluations.

On the other hand, some organizations do exist that employ somewhat objective methods of evaluation of intra-organizational groups.

These have created profit and loss statements (or "income statements") and balance sheets for individual groups, and used these tools of accounting to conduct evaluations of these groups. This is generally called managerial accounting.

While more subjective than conventional methods for evaluating individuals, these methods have suffered from the following problems.

Since groups known as administrative units have no sales, only their costs are recorded and their profits are unknown. Groups that do have sales, such as a sales department, are allocated some pro rata proportion of the administrative unit' s expenses, but since they are unable to control that portion of expenses thus designated theirs, they lack control over indirect administrative expenses, which account for a large proportion of organizational expenses.

Proportions allocated pro rata are usually determined on the basis of floor space, number of employees, sales recorded or some similar basis, which appears at first to be objective, but it is possible for pro rata proportions to be defined in an arbitrary fashion and it is, moreover, a highly subjective matter whether any given pro rata proportion used is in fact valid or not.

Furthermore, conventional managerial accounting employs the same account entries as financial accounting and creates financial statements for individual units by dividing those account entries up among units. This makes it possible to aggregate individual account entries -- leasing fees, for example, may be divided into buildings, vehicles and office equipment by means of subsidiary account entries -- but does not make it possible to identify which portion of each is used for specific activities.
Furthermore, organizations that have used profit and loss statements and balance sheets to evaluate intra-organizational groups have done so only for comparatively large groups that are considered business operations unto themselves and not for the smaller groups that make up these larger groups.

The principal methods for determining pay have been cumulative, in which the previous year's pay rate is raised by an amount determined by a numerical score awarded the individual. Some organizations have used pay schedules, in which an individual's grade is the determinant of his pay and the evaluation of an individual that of his grade. Such systems have had no scope for a fall in the amount paid an individual, however little his own contribution to the organization, and make it difficult to gear pay to the contribution an individual makes.

Where systems of annual salary are in use, an individual's performance in the previous year is evaluated according to some framework, such as management by objective, to determine his salary salaries in the following year, thus perpetuating undiluted the shortcomings of systems of management by objective. In short, they suffer from the problems extant in methods of defining targets and of evaluating achievement rates in management by objective, and in the end differ little from conventional methods of determining pay.

Retirement pay is almost always determined by a method of multiplying pay at time of retirement by the number of years of employment, but such methods do not result in a payment corresponding to the extent or degree of contribution to the organization during the full course of employment. Had an employee engaged in conduct injurious to the organization during his time of employment, for example, he would still have been paid according to formula unless that conduct had incurred disciplinary measures.

The first objective of this invention is to provide a method and system of objective evaluation of individuals as constituent members of an organization and/or groups comprised of one or more individuals as constituent members of an organization.

A second objective of this invention is to provide a method and system of evaluation that both eliminates inconsistent subjective understandings of the evaluation process held by evaluators and evaluees within an organization and so achieves genuine meritocracy, and screens operational tasks carefully, bolsters work activities that relate to profits and maximizes profit to the organization, through the conduct of objective evaluations by means of applying defined methods of evaluation of individuals and groups comprising one or more individuals as constituent members of the organization and defining precisely what is subject to evaluation.

A third objective of this invention is to provide a method and system of evaluation capable of motivating an organization by linking the profit of individuals with the profit of the organization and manifesting the ambition to increase profits by means of digitizing and quantifying in tools of accounting the internally and externally directed activities of individuals and groups comprising one or more individuals as constituent member of the organization.

A fourth objective of this invention is to provide a method and system of evaluation using tools of accounting to evaluate the internally and externally directed activities of individuals and groups comprising one or more individuals as constituent members of an organization, thereby enabling establishing clear individual and group authority and responsibility for investment and expenditure, inhibiting unneeded investment and optimizing investment made, enabling the construction of budgets appropriate to what their executors consider genuinely feasible and necessary rather than budgets imposed by a superior, and smoothing the way for dynamic operational activities.

A fifth objective of this invention is to provide a management system for managing the profit and loss of individuals as constituent members of an organization and/or groups comprised of one or more individuals as constituent members of an organization.

### DISCLOSURE OF THE INVENTION

To achieve the first through fourth objectives above the invention of Claim 1 is characterized by methods of using computers to evaluate individuals as constituent members of an organization and/or groups comprised of one or more individuals as constituent members of that organization by rendering the internally and externally directed activities of the organization as billables,
steps in which the internally and externally directed activities of the organization are quantified and those values stored in one or more databases, and
steps in which those individuals and/or groups as constituent members of the organization are evaluated on the basis of values accumulated in the databases
To achieve the first through fourth objectives above, the invention of Claim 2 is characterized by methods of using computers to evaluate individuals as constituent members of an organization and/or groups comprised of one or more individuals as constituent members of that organization by means of applying tools of accounting to internally and externally directed activities of the organization,
steps in which the internally and externally directived activities of the organization are quantified by rendering them as accounting transactions and those values stored in one or more databases, and
steps in which those individuals and/or groups as constituent members of the organization are evaluated on the basis of values accumulated in the databases.

To achieve the first through fourth objectives above, the invention of Claim 3 is characterized by methods of using computers to evaluate individuals as constituent members of an organization and/or groups comprised of one or more individuals as constituent members of that organization by means of applying tools of accounting to internally and externally directed activities of the organization,
storage in one or more databases profit and loss statement data and balance sheet data for each individual as a constituent member of the organization and/or group comprised of one or more individuals as constituent members of that organization,
steps in which either the profit and loss statement data or the balance sheet data, or both sets of data, is used to reflect the internally and externally directed activities of the organization either as billables or as accounting transactions in the databases as individualized accounts for the individuals and/or groups,
steps in which income accruing to and/or expenditures incurred by individuals and/or groups are reflected in their individualized accounts in the databases, and
steps in which the profit and loss statement data and/or the balance sheet data calculated by means of the above steps is used to evaluated the individuals and/or groups.

To achieve the first through fourth objectives above, the invention of Claim 4 is characterized by methods for evaluating individuals as constituent members of an organization and/or groups comprised of one or more individuals as constituent members of that organization that apply accounting methods to the internally and externally directed activities of the organization and perform evaluations of those individuals and/or groups on the basis of computer system output that takes the accounting data as input, and
means of computation provided to the computer system that perform accounting calculations on the internally and externally directed activities of the organization for the individuals as constituent members of an organization and/or groups comprised of one or more individuals as constituent members of that organization, and evaluate the individuals and/or groups on the basis of the output of the profit and loss, and asset and liability, calculations for those individuals and/or groups.

The invention of Claim 5 is characterized by provision of the invention of Claim 4 with means of computation that, when the means of computation of the computer system of Claim 4 have quantified the activities of the individuals as constituent members of the organization and input those values, calculate the profit and loss and the assets and liabilities generated and incurred by individuals, calculation of the interrelationships between the profit and loss and the assets and liabilities generated and incurred by particular individuals and those generated and incurred by the groups to which those individuals belong and between the profit and loss and the assets and liabilities generated and incurred by particular groups comprised of such individuals and the higher-order groups to which those groups belong, and means of updating these calculations of profit and loss and of assets and liabilities generated and incurred by these individuals, the groups to which such individuals belong and the higher-order groups to which such groups belong.

The invention of Claim 6 is characterized by provision of the invention of Claim 5 with capability for differentiation among individuals and among groups according to their attributes and, where groups have hierarchical relationships, capability for updating the relationships between higher-order and lower-order groups by modifying the attributes assigned to individuals and groups.

To achieve the first through fourth objectives above, the invention of Claim 7 is characterized by methods for evaluating individuals as constituent members of an organization and/or groups comprised of one or more individuals as constituent members of that organization that render internally and externally directed activities of the organization as billables and conduct those evaluations on the basis of the processing output of a computer system that takes those billables as inputs, and
which computer system also quantifies the internally and externally directed activities of the organization as the activities of individuals as constituent members of an organization and/or groups comprised of one or more individuals as constituent members of that organization and determines, on the basis of those calculations, the pay of particular individuals.

To achieve the first through fourth objectives above, the invention of Claim 8 is characterized by methods for evaluating individuals as constituent members of an organization and/or groups comprised of one or more individuals as constituent members of that organization that apply tools of accounting to the internally and externally directed activities of an organization, evaluate individuals and/or groups as constituent members of the organization on the basis of processing output of a computer system that takes those tools of accounting as input, and
which computer system also evaluates the internally and externally directed activities of the organization as the activities of individuals as constituent members of an organization and/or groups comprised of one or more individuals as constituent members of that organization in accounting terms and determines, on the basis of the profit and loss and the assets and liabilities generated and incurred by those individuals and groups, the pay of particular individuals.

To achieve the first through fourth objectives above, the invention of Claim 9 is characterized by methods for evaluating individuals as constituent members of an organization and/or groups comprised of one or more individuals as constituent members of that organization that render internally and externally directed activities of the organization as billables and conduct those evaluations on the basis of the processing output of a computer system, and
which computer system also quantifies the internally and externally directed activities of the organization as the activities of individuals as constituent members of an organization and/or groups comprised of one or more individuals as constituent members of that organization and determines, on the basis of those calculations, the retirement or severance pay of particular individuals.

To achieve the first through fourth objectives above, the invention of Claim 10 is characterized by methods for evaluating individuals as constituent members of an organization and/or groups comprised of one ormore individuals as constituent members of that organization that apply tools of accounting to the internally and externally directed activities of an organization, evaluate individuals and/or groups as constituent members of the organization on the basis of processing output of a computer system that takes those tools of accounting as input, and
which computer system also evaluates the internally and externally directed activities of the organization as the activities of individuals as constituent members of an organization and/or groups comprised of one or more individuals as constituent members of that organization in accounting terms and determines, on the basis of the profit and loss and the assets and liabilities generated and incurred by those individuals and groups, the retirement or severance pay of particular individuals.

The invention of Claim 11 is characterized by provision of the invention of Claim 4 with maintenance of the logical structure of the contractual relationships between individuals as constituent members of an organization and/or groups comprised of one or more individuals as constituent members of that organization, and the performance of automatic calculations on the basis of those contractual relationships when applying the tools of accounting.

To achieve the objectives above, the invention of Claim 12 is characterized by methods for evaluating individuals as constituent members of an organization and/or groups comprised of one or more individuals as constituent members of that organization that apply tools of accounting to the internally and externally directed activities of an organization,
means of reflecting the internal and external transactions of the organization in internal transaction accounts and external transaction accounts,
means of calculating the profit and loss and/or the assets and liabilities of individuals and/or groups within the organization, and
means of evaluating individuals and/or groups on the basis of the results obtained from these means.

To achieve the fifth objective above, the invention of Claim 13 is characterized by a profit and loss management system that utilizes any one or more of the evaluation systems of Claims 4 through 12 to manage the profit and loss of individuals as constituent members of an organization and/or groups comprised of one or more individuals as constituent members of that organization.

### BRIEF DESCRIPTION OF THE DRAWINGS

FIG. 1 is a block diagram of a computer system used in the application of the intra-organization evaluation system that is a preferred embodiment of the present invention.
FIG. 2 illustrates an organization to serve as an example in describing the application of the intra-organizational evaluation system that is a preferred embodiment of the present invention.
FIG. 3 illustrates the transfer between groups of an individual within an organization to serve as an example in describing the application of the intra-organizational evaluation system that is a preferred embodiment of the present invention.
FIG. 4 is a block diagram of a computer system used in the application of the organization evaluation system that is a preferred embodiment of the present invention.
FIG. 5A through 5C illustrate the journalizing executed internally to the organization evaluation system that is a preferred embodiment of the present invention.
FIG. 6 illustrates the journalizing executed internally to the organization evaluation system that is a preferred embodiment of the present invention.
FIG. 7A and 7B illustrate the journalizing executed internally to the organization evaluation system that is a preferred embodiment of the present invention.
FIG. 8 illustrates a database in a computer system used in the organization evaluation system that is a preferred embodiment of the present invention.
FIG. 9 is a block diagram of another example of a computer system used in the application of the organization evaluation system that is a preferred embodiment of the present invention.

### REFERENCE NUMERALS IN DRAWINGS

- 1, 1A: computer systems
- 2, 2A: servers
- 2a: operating system
- 2b: application programs
- 2c: CPU
- 2d: database control mechanism
- 2e: communications mechanism
- 3: databases
- 4: telecommunications lines
- 5: personal computers (PC)
- 6: means of computation
- 7: means of conversion
- 8: means of tabulation
- 11: computer system
- 13: main server
- 15: computer
- 17: local area network (LAN)
- 17a: wireless LAN
- 19: public telecommunications lines and Internet
- 21: communications device
- 23: cellular phone network
- 30: databases

### DESCRIPTION OF THE PREFERRED EMBODIMENTS

The following description of the preferred embodiments of the present invention makes reference, where necessary, to the accompanying drawings.

The present invention is described below in two preferred embodiments of a method of evaluation and system of evaluation and of a profit and loss management system, one that makes use of profit and loss statements (or "income statements") and balance sheets, and another that takes the form of a scoring system that does not make use of profit and loss statements (or "income statements") and balance sheets.

The first preferred embodiment of the present invention is a method of evaluation and system of evaluation that makes use of balance sheets and profit and loss statements. The terms "profit and loss statement" and "balance sheet", as used herein, refer not only to databases and hard copy output resulting from calculation and tabulation, but also encompass the journal and account balance data sets that serve as input to that calculation and tabulation.

The term "billable", as used herein, refers not only to the transaction of tangible assets, but also encompasses transactions of and contracting for valuables, services, information, intangible assets and the like.

The method of evaluation making use of profit and loss statements and balance sheets of the present invention is a method of evaluation that applies tools of accounting to the internally and externally directed activities of individuals that are constituent members of an organization or of groups comprising one or more individuals that are constituent members of that organization, or of such individuals and such groups, and evaluates them on the basis of the output of a computer system that takes those tools of accounting as inputs.

This method is comprised of performing, as required, the following processing on a computer system:
First, the rendition as accounting transactions or as billables of the internally and externally directed activities of those individuals or groups, or of those individuals and those groups;
Second, the quantification of all or a part of those activities thus rendered as accounting transactions or billables;
Third, the calculation, on the basis of that quantification, of profit and loss and of assets and liabilities generated and incurred;
Fourth, the evaluation of those individuals or groups, or of those individuals and those groups, on the basis of the profit and loss and the assets and liabilities thus calculated; and
Fifth, the calculation of cash flow, as such proves necessary.

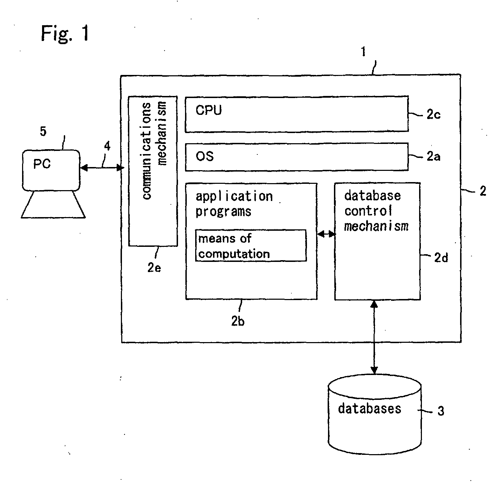

Such a method of evaluation of the individuals or groups, or of the individuals and the groups, within an organization may be implemented by means of the computer system illustrated in Figure 1.

The computer system 1 is comprised of servers 2 that implement the method of evaluation of the present invention, databases 3 connected to the servers 2 and personal computers (PCs) 5 connected over telecommunications lines 4.

The servers 2 are provided with an operating system (OS) 2a, application programs 2b, a central processing unit (CPU) 2c that runs the OS 2a and application programs 2b, a database control mechanism 2d that accesses the databases 3 under the control of the application programs 2b, and a communications mechanism 2e that handles communications between the PCs 5.

The computer system 1 houses an intra-organizational evaluation system that operates by applying tools of accounting and performing intra-organizational calculations on the basis of the quantified output of those tools of accounting.

The computer system 1 and servers 2 are provided with a means of computation 6 that performs steps in which the internally and externally directed activities of individuals or groups, or of individuals and groups, within the organization are quantified as accounting transactions and the resulting data stored in the databases 3, and steps in which evaluations of individuals as constituent members of the organization and/or groups comprised of one or more individuals as constituent members of the organization are conducted on the basis of those calculations of profit and loss and of assets and liabilities accumulated in the databases 3.

When an individual or a group within the organization conducts an internally or externally directed activity, that activity is input to the servers 2 by the PCs 5 of the computer system 1 over the telecommunications lines 4 or is input directly to the servers 2. The means of computation 6 of the servers 2 of the computer system 1 calculates profit and loss, and assets and liabilities, on the basis of the accounting quantification of each such activity. A comprehensive and objective evaluation of the individual or the group within the organization may be performed by means of their concrete, quantified profit and loss, and assets and liabilities, obtained from the computer system 1.

Organizational activities, internally or externally directed, refers to all conduct by individuals as constituent members of the organization and/or groups comprised of one or more individuals as constituent members of the organization that is occasioned by organizational operations. Externally directed organizational activities generally include commercial transactions. Internally directed organizational activities include, in addition to the requisite labor occasioned by operational activities, all such expenditures as of travel expenses, rent, lighting and heating expenses, depreciation expenses, interest, meeting expenses and entertainment expenses.

The term "organization", as used herein, refers to a supra-organization that comprises individuals or groups comprising one or more individuals that has defined objectives. This includes, for example, entities such as stock corporations and limited liability companies as defined in commercial law and profit-making corporations, non-profit corporations, local public bodies and other such entities as defined in other laws. Individuals that are constituent members of such organizations may be referred to herein as "members". One or more individuals may also collectively form a group.

The term "group", as used herein, may refer to single or multiple entities situated at any level in the hierarchical structure of an organization such as a company and being of any size whatsoever. Whereas particular companies may refer to particular kinds of such groups as divisions, departments, sections, teams and the like, the term "group", as used herein, includes all such units, whatever they may be called by particular organizations. Multiple groups may combine to form larger groups.

Although the present invention conceives of organizations and groups somewhat differently from the conventional company organization, such conventional company organizations may provide a useful guide to understanding. The organization that is the conception of the present invention may be compared to an independent company, and a supra-organization may be compared to a holding company or a company that produces consolidated financial statements. Although the multiple hierarchical layers within an organization may be compared to the divisions and departments found within companies, the present invention makes no reference to any such specific structure; in practice, it is preferable for an organization to have a hierarchical structure that is not deep.

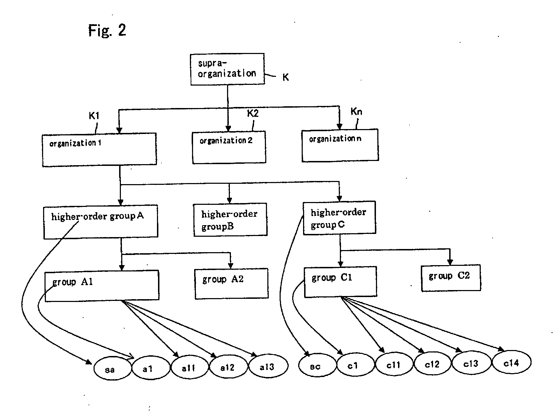

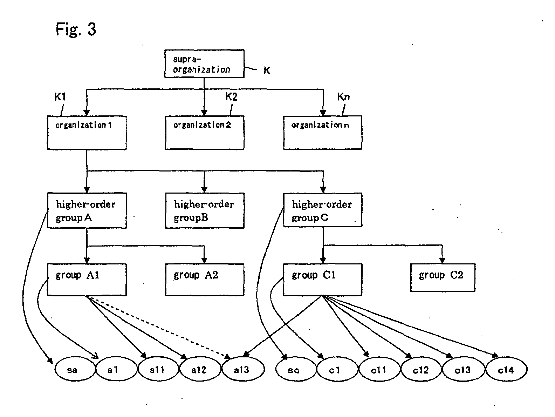

Figures 2 and 3 illustrate examples of an organization.

Figures 2 and 3 are provided to illustrate an organization to which is applied an organizational evaluation system that is a preferred embodiment of the present invention.

In Figures 2 and 3, the supra-organization K is comprised of multiple organizations K₁, K₂ ... Kₙ. Organization K₁ is comprised of higher-order groups A, B and C. The compositions of organizations K₂ ... Kₙ are omitted and not required for the purposes of this specification. Higher-order group A is comprised of groups A₁ and A₂. The composition of higher-order group B is omitted and not required for the purposes of this specification. Higher-order group C is comprised of groups C₁ and C₂.

Higher-order group manager sa is the individual who manages higher-order groupA. Groupmanager a1 is the individual who manages group A₁. Group members a11, a12 and a13 are individuals who are constituent members of group A₁.

Higher-order group manager sc is the individual who manages higher-order group C. Group manager c1 is the individual who manages group C₁. Group members c11, c12, c13 and c14 are individuals who are constituent members of group C₁.
Note that in Figure 3 group member a13 that had been a constituent member of group A₁ has now joined group C₁.

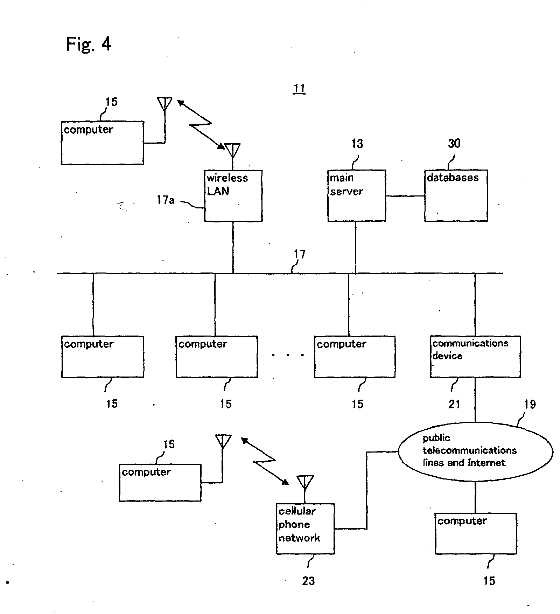

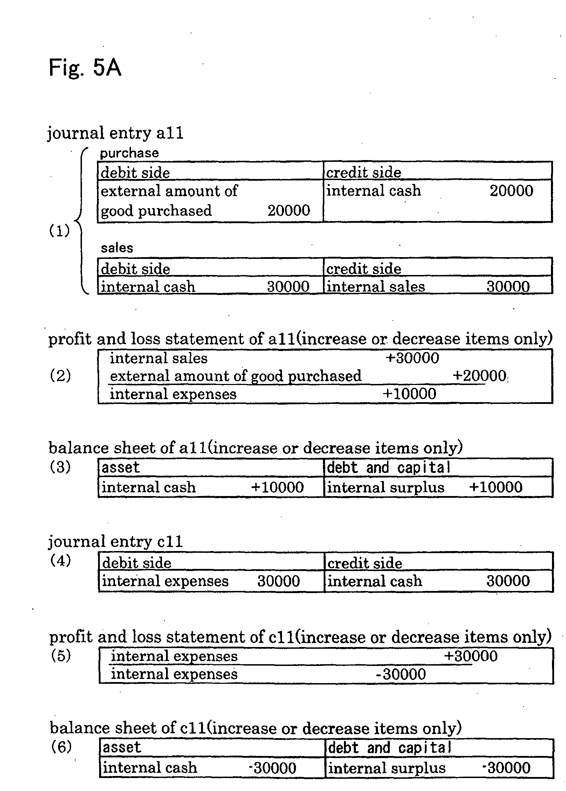

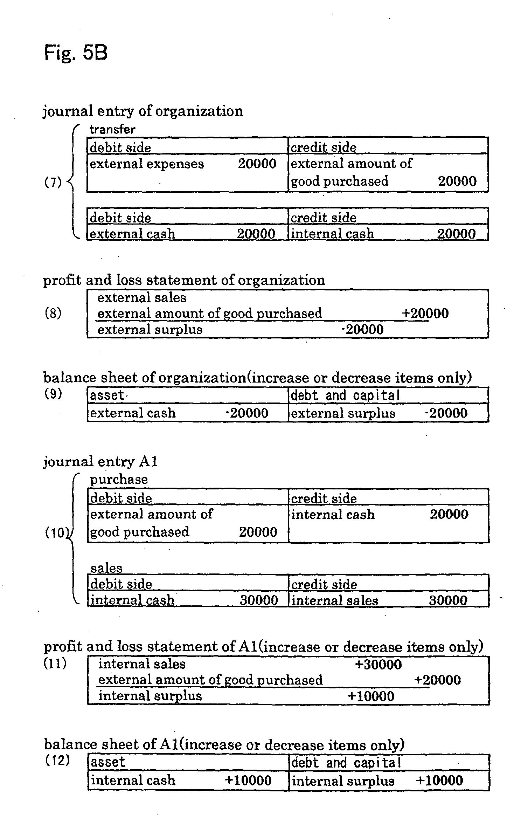

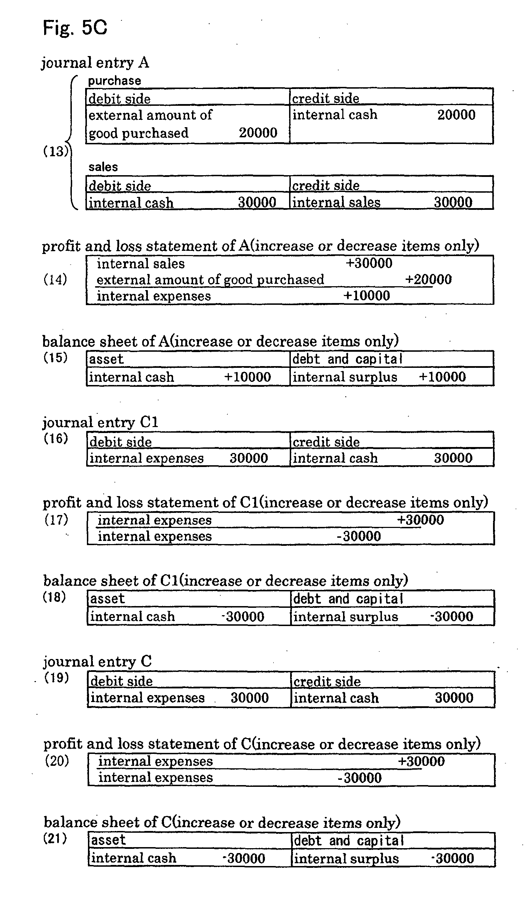

Figure 4 is a block diagram of a computer system used in an organization evaluation system that is a preferred embodiment of the present invention. Figures 5 through 8 illustrate databases in the computer system used in an organization evaluation system that is a preferred embodiment of the present invention.

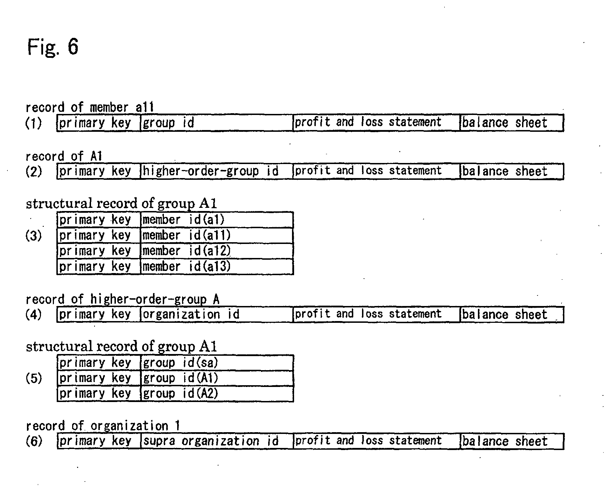

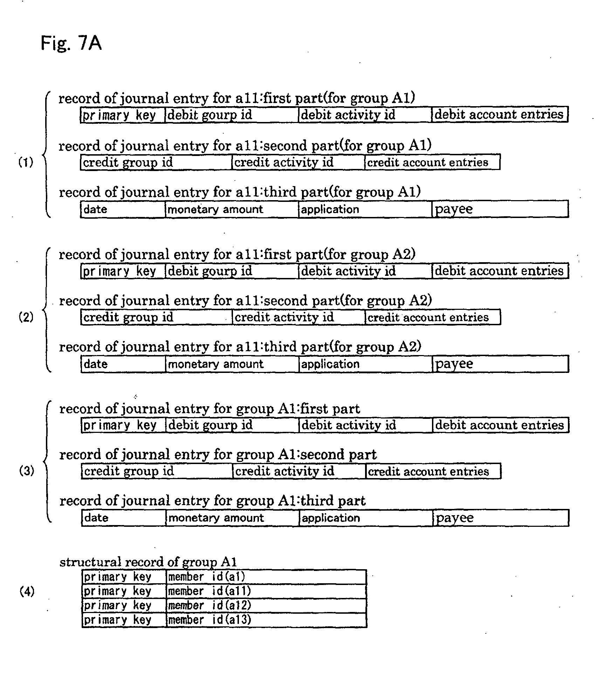

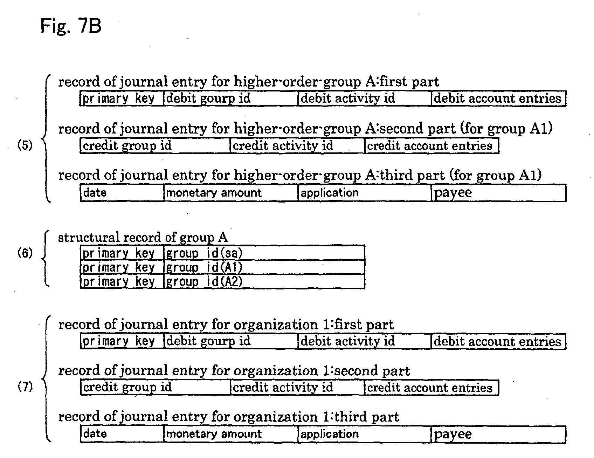

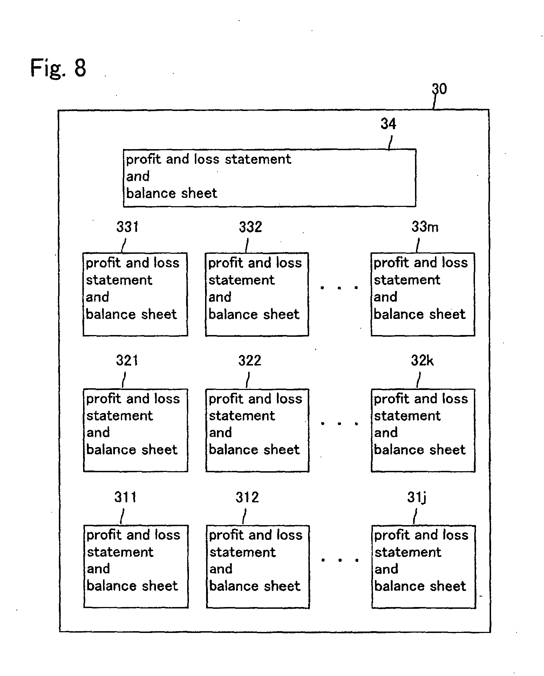

Figures 5A through 5C are provided to illustrate the individual, group and organizational journalizing that is performed in the evaluation system that is a preferred embodiment of the present invention when an individual in one group orders work performed by an individual in another group. Figure 6 is provided to illustrate the journalizing that is performed in the evaluation system that is a preferred embodiment of the present invention. Figures 7A and 7B are provided to illustrate the journalizing that is performed in the evaluation system that is a preferred embodiment of the present invention. Figure 8 is provided to illustrate the j ournalizing executed internally to the evaluation system that is a preferred embodiment of the present invention.

In Figure 4 the computer system 11 used in this organizational evaluation system is, broadly speaking, comprised of a main server 13 and multiple computers 15.

The main server 13 is provided with provided with databases 30 containing individual and group profit and loss statements and balance sheets corresponding to each individual (higher-order group managers sa and sc, group managers a1 and c1, and group members a11, a12, a13, c11, c12, c13 and c14), to each group to which these individuals belong (groups A₁, A₂, C₁ and C₂), to each higher-order group (higher-order groups A, B and C, and organizations K₁, K₂ ... Kₙ) and to the supra-organization K, and with means of computation to reflect accounting transactions in the profit and loss statements and balance sheets.

The computers 15 are allocated to these individuals (higher-order group managers sa and ca, group managers a1 and c1, and group members a11, a12, a13, c11, c12, c13 and c14), the groups to which these individuals belong (groups A₁, A₂, C₁ and C₂), the higher-order groups (higher-order groups A, B and C, and organizations K₁, K₂ ... Kₙ) and the supra-organization K.

Individual computers 15 are connected to the main server 13 via a local area network (LAN) 17. Some computers 15 that are located away from the organization's premises are connected to the main server 13 via a wireless LAN 17a. Some computers 15 that are external to the organization are connected to the main server 13 via public telecommunications lines and the Internet 19, a communications device 21 and the LAN 17. Other computers 15, some internal to the organization and some external to the organization, are connected to the main server 13 via mobile phone facilities 23, the public telecommunications lines and the Internet 19, the communications device 21 and the LAN 17.

These computers 15 are devices for providing input to the main server 13 concerning transactions undertaken and effected between these individuals (higher-order group managers sa and ca, group managers a1 and c1, and group members a11, a12, a13, c11, c12, c13 and c14), between the groups to which these individuals belong (groups A₁, A₂, C₁ and C₂), between the higher-order groups (higher-order groups A, B and C, and organizations K₁, K₂ ... Kₙ) and between other combinations thereof.

The main server 13 has databases 30. As illustrated in Figure 8, these databases 30 store profit and loss statements and balance sheets 311, 312 ... 31j (where j is some integer) for each individual (higher-order group managers sa and ca, group managers a1 and c1, and group members all, a12, a13, c11, c12, c13 and c14), profit and loss statements and balance sheets 321, 322 ... 32k (where k is some integer) for the groups to which these individuals belong (groups A₁, A₂, C₁ and C₂), profit and loss statements and balance sheets 331, 332 ... 33m (where m is some integer) for the higher-order groups (higher-order groups A, B and C, and organizations K₁, K₂ ... Kₙ) and a profit and loss statement and balance sheet 34 for the supra-organization K overall. The main server 13 is arranged to reflect the input data provided to it by the computers 15 concerning transactions undertaken and effected in the individual profit and loss statements and balance sheets 311, 312 ... 31j, 321, 322 ... 32k, 331, 332 ... 33m and 34. The main server 13 is further provided with an order placement and payment settlement system linked to the accounting system to quantify organizational activities and render them as expenses.

Further component elements of an evaluation system implemented on the computer system 11 that operates on individuals and the lowest-order groups as its primary units of evaluation are as described below.

First, all internally and externally directed activities of the supra-organization K should be rendered as accounting transactions or as billables, but exceptions may be provided and some of these activities excluded from such rendition.

For example, activities may proceed smoothly by handling the accommodation of external and internal audits or of investigations by tax authorities not as billables but as obligations.

The externally directed activities of companies have conventionally been rendered as accounting transactions or billables, but not so the internally directed activities of companies.

While rendering internal organization activities as billables does, of course, require consequent clerical buying and selling operations, this constitutes little more than implementing as order placement and order taking activities on the computer system 11 in the form of data exchanges what have conventionally been such activities as issuing vouchers and other business forms when requesting or providing a service. This preferred embodiment of the present invention may be implemented by conducting the buying and selling, and effecting payments, internally on the computer system 11 at the time the transaction is effected, and without placing any particular burden on clerical operations. Such internal sales require no actual exchange of funds, merely processing of fund transfers on the computer system 11.

As illustrated in Figures 2 and 3 and in Figures 5 through 8, individual (higher-order group managers sa and ca, group managers a1 and c1, and group members all, a12, a13, c11, c12, c13 and c14) profit and loss statements and balance sheets 311, 312 ... 31j and group (groups A₁, A₂, C₁ and C₂) profit and loss statements and balance sheets 321, 322 ... 32k and 331, 332 ... 33m are provided to perform calculations at the level of the profit and loss, and assets and liabilities, generated and incurred by these individuals and groups, and means are provided to perform the corresponding calculations for the larger groups (higher-order groups A, B and C) and the group as a whole (the supra-organization K) automatically on the basis of the results obtained for the groups of the smallest size.

In other words, the main server 13 of the computer system 11 is provided with means of computation that performs the accounting calculations for individuals as constituent members of an organization and/or groups comprised of one or more individuals as constituent members of an organization occasioned by internally and externally directed activities of the organization and that evaluates these individuals and/or groups on the basis of the profit and loss statements and balance sheets of the individuals and/or groups.

The means of computation implemented on the main server 13 of the computer system 11 is provided with a means of computation that, when the values obtained by quantifying the activities of individuals as constituent members of the organization are input, calculates the profit and loss and the assets and liabilities generated and incurred by those individuals on the basis of the data input, with calculation of the interrelationships between the profit and loss and the assets and liabilities generated and incurred by particular individuals and those generated and incurred by the groups to which those individuals belong and between the profit and loss and the assets and liabilities generated and incurred by particular groups comprised of such individuals and the higher-order groups to which those groups belong, and means of updating these calculations of profit and loss and of assets and liabilities generated and incurred by these individuals, the groups to which such individuals belong and the higher-order groups to which such groups belong.
The means of updating is arranged to provide capability for differentiation among individuals and among groups according to their attributes and, where groups have hierarchical relationships, capability for updating the relationships between higher-order and lower-order groups by modifying the attributes assigned to individuals and groups and/or to groups and groups. A system of evaluation thus comprised may be implemented as specifically described below.

The server 13 of the computer system 11 is provided with a means of conversion for quantifying these activities and may also perform the calculation by simply pointing, for example, with this means of conversion and without using the profit and loss statements and balance sheets.

While the preferred embodiment of the present invention described above ascertains the profit and loss and the assets and liabilities of both individuals and groups, this need not apply uniformly throughout the organization: the profit and loss and the assets and liabilities of some individuals may be calculated at the individual level, while those of others may be subsumed within the group to which the individual belongs and not calculated at the individual level.

The discussion below applies the example of cash registers as are found in supermarkets to describe how activities may be rendered as accounting transactions or billables.

Individuals attending the cash registers make sales. All sales income should be reckoned as the sales of the register attendant making those sales. The individual charged with procurement handles procurement. The cost of goods of the register attendant is set at, for example, 93% of the sales price. This raises issues of stocking bottlenecks caused by insufficient funds in the profit and loss statement and the balance sheet of the register attendant, and of how to handle the risk of unsold goods. Such problems might be handled as follows. If stocking is performed when a sale occurs, as when procurement is outsourced, the register attendant will not require a large amount of funds. And the respective cost of goods borne by the stocking group and by the cash register group could be changed according to which bears the risk of unsold goods.

In some cases, the register group's cost of goods could be defined so that profit rises by an amount equivalent to register attendant personnel expenses. In other cases, the register group might be assigned to bear expenses required for its operations, such as the cash registers or the rent. Alternatively, procurement and register operation might be combined in a single group, or the register group could be assigned to bear the risk of unsold goods.

Production and marketing groups often hold differing views on how a product will sell. Whereas a production group may expect a product to sell a remarkable 100,000 units, for example, the marketing group may expect it to sell 10, 000 units at most. Or, their views may be reversed. In conventional organizational systems, the production group might end in blaming a failure in the market on the marketing group or the marketing group might point to problems with the production group's planning, and responsibility never lands finally with either of them.

In the preferred embodiment of the present invention, the two groups would start by discussing where to delineate their respective responsibilities. If the marketing group expects to sell 10,000 units, it could take responsibility for sales of up to that level, sales beyond which would be the responsibility of the production group. Their respective shares of income from sales would, of course, change with the degree of responsibility taken by each group. The production group, for example, might receive a 60% share of sales income for the first 10,000 units sold and 80% for all sales beyond that level. On the other hand, the marketing group might then take responsibility for losses from any unsold goods up to 10,000 units and the production group for any unsold goods beyond that level of production.

These examples are extreme cases. Implementation of the preferred embodiment of the present invention would smooth the way to an arrangement acceptable to both groups since they both face greater risk. In more than a few cases conventional systems have occluded rational decision making by leaving that risk uncertain.

Furthermore, the preferred embodiment of the present invention clearly assigns responsibility to each group by basing transactions on contracts.

Concern might be expressed that defining risk clearly in this fashion might lead to timid marketing plans, but since timid marketing plans would result in meager sales and so meager profits for the group concerned, that group would also find it necessary to develop aggressive strategies. Furthermore, both the production group and the marketing group would have no choice but to think hard about how to expand sales and profits. The marketing group would have greater incentives to identify consumers' needs with accuracy, and the production group greater incentives to develop new production methods and pursue cost reductions.

Activities rendered as accounting transactions or billables should be as specific and at as detailed a level as possible, but should also be allocated among individuals as by reckoning a systems development project, or other activity of similar scale, the activity of a group manager and individual operations within such projects the activities of individual members of that group. Activities may also, as described below, be defined according to job function, such as settlement at supermarket cash registers or credit checks and the purchase of external credit instruments in a financial group.

The discussion following describes the functioning of an intra-organizational evaluation system implemented in the computer system 11.

### An example taking the individual as the unit of reckoning

First, we describe an implementation that takes individuals as the unit for reckoning profit and loss, and assets and liabilities. All activities within an organization as billables; however, it will not hinder the positive impact of the present invention to exclude some portion of those activities from rendition as billables.

This preferred embodiment of the present invention provides the profit and loss statements and balance sheets 311, 312 ... 31j illustrated in Figure 8 for all instances of the primary unit of individuals (higher-order group managers sa and ca, group managers a1 and c1, and group members a11, a12, a13, c11, c12, c13 and c14) illustrated in Figures 2 and 3. This preferred embodiment of the present invention also provides the profit and loss statements and balance sheets 321, 322 ... 32k for the groups (groups A₁, A₂, C₁ and C₂) to which those individuals belong and the profit and loss statements and balance sheets 331, 332 ... 33m for the higher-order groups (higher-order groups A, B and C, and organizations K₁, K₂ ... Kₙ), thus providing these financial statements for units at all levels of the organization for which calculations are performed.

For the sake of convenience, we will refer here to the highest-order organizations K₁, K₂ ... Kₙ as Level 1, to the next-lower-order groups A, B and C as Level 2, to the next-lower-order groups A₁, A₂, C₁ and C₂ and Level 3, and finally to individuals as Level n. Although the beneficial effects of the present invention will prove available with any number of hierarchical levels, for greatest efficacy there should be as few hierarchical levels as possible.

When establishing groups within the organization, there is of course no need to provide them all with the same internal number of hierarchical levels; their number of internal hierarchical levels may vary with no detrimental effect.

As shown in Figure 8, individual profit and loss statements and balance sheets 311, 312 ... 31j have unique identifier keys, such as employee numbers. The profit and loss statements and balance sheets of individual groups also have unique identifiers.

Before describing an actual calculation, we describe the internal order placement system. This order placement system is provided on the computer system 11. The order placement system provided by means of the computer system 11 provides a standardized order placement interface displayed on the computers 15. This interface is comprised of input fields for information required to define individual orders, such as source of order, addressee, order description, book value, time of delivery and specifications. When this information is input into this interface from some given computer 15, the main server 13 evaluates the addressee field to determine with whom the order is placed and transmits the order information to that addressee's computer 15.

Say individual c11 of group C₁ in this organization places an order with individual a11 of group A₁ for installation of computer software. The journalizing executed internally to the organization evaluation system illustrated in Figure 2 is describedbelowwith reference to Figures 5 through 7. Figures 5 through 7 are provided here to illustrate the journalizing performed by the organization evaluation system that is the second preferred embodiment of the present invention.

First, individual c11 uses the internal computer system 11 to identify individuals and groups providing software installation services. Say that multiple such parties exist; individual c11 compares and considers the options and then decides on individual a11 in group A₁. Next, individual c11 uses the internal order placement system to transmit an order to the computer 15 of individual a11 from his own computer 15. The order placement system sends a message describing the order to the addressee specified. Individual a11 receives this message on his computer 15 and replies either Yes or No from his computer 15. Say that in this case he replies Yes.

At the point the Yes reply is delivered to the computer 15 of individual c11, the two individuals enter into a contract. When individual a11 completes the software installation procedure, he transmits from his computer 15 to the computer 15 of individual c11 via the internal order placement system a report that the procedure is complete. When individual c11 receives at his computer 15 the report that the procedure is complete, he confirms the report and, if no problems are identified, responds OK from his computer 15, upon which payment is effected. At this time, notice should be transmitted to the computer 15 of individual a11 that payment has been effected to the profit and loss statement and balance sheet 311 of individual a11.

Given a software charge of 20, 000 yen and an installation fee of 10, 000 yen, the means of computation of the main server 13 credits the account of member a11 with a profit of $100. (See Figure 5A.)

A profit and loss statement and a balance sheet are maintained in the databases for each individual subject to evaluation. Each such individual is treated as an accounting personality within the organization, and accounting transactions occasioned by the activities of an individual are effected through the profit and loss statements and balance sheets of individuals.

Journals of accounting transactions occasioned by these activities include such information as the IDs of the individuals, the IDs of the groups to which they belong and an activity ID. The profit and loss statement and balance sheet of each individual are treated as single units of account, and transactions within the organization are effected through those units of account. In other words, sales are treated as the sales of individuals and expenses as the expenses of individuals. A profit and loss statement and balance sheet may also be maintained for individual groups, and those groups may have accounting personalities within the organization.

### Specific journalizing methods

This description of how such accounting transactions are actually reflected in profit and loss statements and balance sheets makes reference to Figures 5A through 5C. Although Figures 5A through 5C use plus (+) and minus (-) symbols to express numeric increases and decreases and specify the rise and fall of individual entries, the actual profit and loss statements and balance sheets would not, except in special cases, use negative numerical expression, rather stating the balance obtained by subtracting the amount of the decrease from the previous balance as a positive number. This processing is performed by the means of computation of the main server 13.

First, we provide a brief description of the account entries used.

An account entry called External xx is used for external transactions. An account entry called Internal xx is used for internal transactions. Internal transaction account entries and, as necessary, external transaction account entries are used for internal transactions. Defining account entries thusly provides a framework for the journalizing occasioned by transactions within the organization in which all charges offset each other in the end, leaving only the figures corresponding to external transaction account entries.

External transaction account entries correspond to those found in conventional methods of accounting, such as financial accounting and tax accounting.

Internal transaction account entries are used for internal transactions and may be freely defined by individual organizations, but should be consistent with the external transaction account entries.

A third and fourth group of account entries may also be defined, as necessary, in addition to the internal and external account entries.

Internal and external account entries should be assigned leading codes that identify them as internal or external, and the same ones should be used for internal and external account entries to facilitate computer processing.

The following account entries are used in the drawings.
External expenses: Purchases from outside the organization treated as expenses
External cash: Cash generated from transactions with entities outside the organization
External amount of goods purchased: Amount of goods purchased from entities outside the organization
Internal sales: Sales within the organization
Internal cash: Cash for settling transactions within the organization
Internal surplus: Profits generated in transactions within the organization.

The means of computation of the main server 13 executes the following journalizing operations.

In journal entry a11, 20, 000 yen is declared on the debit side as external amount of good purchased and 20,000 yen is declared on the credit side as internal cash. (See (1) in Figure 5A.) This results from the purchase of software with cash. When installation procedures have been completed, 30,000 yen is declared on the debit side as internal cash and 30,000 yen on the credit side as internal sales in order to tally the internal sale. (See (1) in Figure 5A.) In the profit and loss statement of a11, internal sales rises by 30, 000 yen, external amount of goods purchased by 20,000 yen and internal profit by 10,000 yen. (See (2) in Figure 5A.)

In the balance sheet, this journalizing results in an increase of 10,000 yen in internal surplus due to the 10,000 asset increase in internal cash of a11. (See (3) in Figure 5A.) This applies likewise to group A₁. (See (10) through (12) in Figure 5C.) This applies likewise to group A also. (See (13) through (15) in Figure 5C.)

The organization experiences a transfer of external amount of goods purchased to external expenses. This assumes that the software installed will be used within the organization and not sold to an external entity. (See (7) in Figure 5B.) Since there is no change in sales, this is blank in the profit and loss statement of the organization. There is a 20,000 yen increase in external expenses and a 20, 000 yen fall in external income. (See (8) in Figure 5B.) In the balance sheet of the organization, there is a 20,000 yen fall in external cash and a resultant 20,000 yen fall in external profit. (See (9) in Figure 5B.)

In the balance sheet of the organization, there is a 20,000 fall in external cash and a resultant 20,000 fall in external surplus. (See (9) in Figure 5B.)

In journalizing for individual c11, 30,000 yen is declared on the debit side as internal expenses and 30,000 yen on the credit side as internal cash. (See (4) in Figure 5A.) In the profit and loss statement of c11, this journalizing results in a 30,000 yen increase in internal expenses and a 30,000 fall in internal profit. (See (5) in Figure 5A.) In the balance sheet of c11, there is an asset fall of 30,000 yen in internal cash and a rise in the capital account of 30, 000 yen as internal profit. (See (6) in Figure 5A.)

These figures apply likewise to group C₁ (see (16) through (18) in Figure 5C) and likewise to group C (see (19) through (21) in Figure 5C).

This example assumes the purchase is made with cash, but it may also be made from accounts payable, in which case the system should check whether the individual making the purchase has sufficient assets. This is because, while a cash purchase requires cash, the use of accounts payable does not require cash, but a purchase might be made in excess of the assets of an individual. Incorporation of such a checking function allows checking for reckless purchases.

When requesting payment of accounts payable from, for example, a finance group, the framework should provide for the payment of a fixed commission, which expense constitutes a sale of the finance group.

The means of computation of the main server 13 simultaneously updates the individual profit and loss statements and balance sheets of the individual placing the order and the individual filling the order and the profit and loss statements and balance sheets of the groups that these individuals belong to, all these financial statements being provided in advance to the system. First, the means of computation of the main server 13 retrieves the profit and loss statements and balance sheets affected by the transaction. The means of computation of the main server 13 retrieves the profit and loss statement and balance sheet 311 of individual a11 and the profit and loss statement and balance sheet 321 of group A₁, to which that individual belongs. The means of computation of the main server 13 also identifies the higher-order group K₁ to which group A₁ belongs and retrieves the profit and loss statement and balance sheet 331 of organization K₁ and, in some cases, the prof it and loss statement and balance sheet 34 of the supra-organization K₁. These are held ready for ease of access by the means of computation of the main server 13, which credits the sale to group A₁, to which individual a11 belongs, simultaneously with crediting the sale to individual all, who filled the order. It is important to note here that since the transaction is an internal one, the amount of the sale may be appropriated if the transaction is across discrete groups, but not if it is within a single group. This is nothing particularly novel, being the method conventionally in use where companies conduct internal trading transactions. Settlement is effected by updating the profit and loss statements and balance sheets of the parties to the transaction, and no such action as an actual transfer of funds is required.

Simultaneously with updating the profit and loss statement and balance sheet 311 of individual a11 who filled the order, the means of computation of the main server 13 also updates the corresponding financial statements of group A₁, to which that individual belongs, and of the higher-order groups (higher-order group A and organization K₁) and of the supra-organization K. However, as described above, some sales amounts are not appropriated (in strict operational terms, they are added in and then subtracted). This is because when a transaction is effected within a group, it constitutes a sale between the individuals who are party to the transaction, but does not count as sales or profit to the group that they belong to. This does not differ from internal trading systems conventionally in use. Likewise, sales transactions between groups count as a sale (or purchase) by and profit (or debit) to those groups, but are not counted as sales or profit of the organization to which they belong.

Like those of the individual filling the order, the financial statements of the individual placing the order and of the higher-order groups to which his group belongs are debited with expenditure for the purchase of a service.

When an activity is completed, the individual placing the order should examine the delivery and quality of the activity and make final confirmation of the amount of the sale.

The above example illustrates one way the profit and loss statements and balance sheets of individuals and groups may be updated each time journalizing occurs; another possible method is to assign codes (individual IDs) to individuals in accounting journals, store the journal as raw data and aggregate individual and group journals to calculate profit and loss statements as needed. Since account entries return to zero at the beginning of prescribed settlement periods, profit and loss statements require figures calculated as journalized totals occurring during those periods. On the other hand, since balance sheets are maintained and their entry amounts are persistent across settlement periods, a balance carried forward will be required and so a record created having the balance carried forward and the balance carried forward calculated from individual journalizing. This may result in slower response time for calculations when totals are needed, but also offers the benefit of not requiringmodifications to profit and loss statements and balance sheets when relationships between individuals and groups change.

Where care must be taken in handling balance sheets is, when multiple activities exist within groups, it is possible to create a balance sheet for each group and for each activity, but for the organization as a whole this constitutes duplicated figures and so balance sheet calculations must be performed so that there is no duplication.

An identification code (activity ID) should be assigned to each activity to allow journalizing activity by activity. This allows a detailed assessment of the figures for individual activities. Activity IDs may also be assigned to different levels of a hierarchy. For example, a major activity ID may be assigned to a systems development project, mid-level activity IDs to system design and program development, and minor activity IDs to individual program development activities.

### Placing an order with a group

The above example is of an order placed by individual c11 with individual a11, but in actual practice it would be more realistic for individual c11 to place an order with the group A₁. Discussion internal to group A₁ would then consider which individuals are suitable to fill the order and how much work currently occupies each individual in the group, so assigning the job to a particular individual appropriate to fill the order. Group A₁ fills orders for software installation for other groups at a rate of 30, 000 yen per installation and, internally to group A₁, places orders for installation with individual a11 at the rate of 27,000 yen per installation. The balance of 3,000 yen constitutes income for group manager a1. From the point of view of individuals a11, a12 and a13, who are members of group A₁, the group manager a1 is a cost. However, just as management positions constitute more than minor organizational roles, so does group manager a1 constitute more than just a cost.

It is also possible automatically to allocate 10% of orders taken and filled to a group manager by defining such to the system in advance as a contract.

The above example is of a group manager gaining sales from individuals that are members of that group at a fixed percentage, but the group manager may also accept a work order and assign it to some individual that is a member of the group. However, care should be taken in adopting this method since it may undeniably result in arbitrary treatment.

Another method of assigning work is to advertise it within the group. The job and the conditions stated are announced to the constituent members of the group, who may then offer to fill it. The framework implemented may resemble that of an auction.

### Roles of the group manager

Thus, while a group manager may become a mere cost, the group manager also must fulfill several major roles not conventionally demanded of him:
1. Construction of a business model and a framework for profitability;
2. Numerical expression of the work of the group;
3. Provision of back-up for group members;
4. Provision of support for the enhancement of group member skills; and
5. Statements of policy on the enhancement of group member skills.

While the foregoing discussion is concerned with relatively fixed group functions, the following implementation leaves room for non-standardized work as well.

First, the group manager, or individual or group, seeking performance of a job publishes the details and advertises for an individual or group to perform the work. An intranet would be an effective medium for doing so. Jobs are advertised and order placement determined according to a bidding system. Such jobs should have specified delivery dates, and penalties should be determined for deadlines missed. Otherwise, individuals may seek and take orders for work beyond their capabilities.

In the interests of achieving a full-fledgedmeritocracy, it should be possible for parties placing orders to specify the individual or group they desire to fulfill them. On the other hand, where a job is simple and one individual may be substituted for another, it should be possible to elect to offer compensation according to an hourly wage.

One of the functions of the group manager is to construct a business model. The group leader must consider what sort of business model to construct, how to expand earnings, and how to maximize the returns to the group and to its constituent members and group leader. Whereas in a conventional organization, this might result in the minimization of returns to the constituent members of the group and the maximization of returns to the group manager, it becomes impossible to do so where individuals may move freely among groups and freely establish groups at will.
In conventional systems, when individual a11 performs a software installation, procurement of the software would constitute a group expense, but under the system of the present invention, the software is procured by and its subsequent sale marked up to the account of individual a11. Since the profit accruing to individual a11 is greater if the software charges are low, he will naturally make an effort to obtain it a low price. Conventionally, procurement has been a group expense or -- more properly -- an organization expense (budgeted at the start of the financial period) and so, although such workers have made some such effort, they have been able to perform their jobs with less than thorough effort.

The description below of how the updating of individual and group, and group and higher-order group, profit and loss statements and balance sheets are conjoined takes as its example the organization illustrated in Figure 2. Individual a11 belongs to group A₁. The profit and loss statements and balance sheets of individual a11 and individual c11 change as shown in Figures 5 and 6. Although negative numerals are used here to indicate falls, in actual practice such entries would be positive numerals representing the sum remaining after subtraction from the balance. The profit and loss statements and balance sheets of group A₁, to which individual a11 belongs, and higher-order group A change in the same fashion as those of individual a11. This is because the relationships between the individual and the group, between the group and the higher-order group, and between the higher-order group and the organization are indexed relationships. Figure 6 (1) provides examples of the structural records that define the relationships between individuals, groups and higher-order groups, and of the records of a particular individual, group and higher-order group.

The record of individual a11 is comprised, as given in Figure 6 (1), of a primary key (a key specifying that individual, such as an individual code), a group ID, a profit and loss statement and a balance sheet. The profit and loss statement and balance sheet are illustrated as maintaining the results of calculations.

Individual records, group records and higher-order group records are all of the same format. (See (2) and (4) in Figure 6.)
In the actual development of a system, these records would generally be subdivided into further data fields and it would also be possible to retain annual accumulations on a monthly basis with subdivided records maintained, but such structures are omitted here, it not being the purpose to describe these in detail. The primary key, as given in Figure 6 (3), will generally be a unique key, such as an employee number, specifying that particular individual (an individual ID). The group ID represents the group to which individual a11 belongs, in this case group A₁. The record of group A₁ has the same format as that of individual records. Here the primary key, as given in Figure 6 (5), is not an individual ID, but the group ID, in this case that of group A₁. The structural record of group A₁ is created to identify the constituent members of that group. Here the first entry is the group manager, but that individual may also be identified by means of some specifying flag. The records of the higher-order group have the same structures.

While we have here depicted individual a11 as a vendor and individual c11 as a purchaser, it may be observed that group A₁ and higher-order group A, to which individual a11 belongs, differ from group C₁ and higher-order group C, to which individual c11 belongs, but both individuals belong to the same Level 1 organization. (See (6) in Figure 6.)

The profit and loss statements and balance sheets are updated by the means of computation of the main server 13 as specified below. The record of individual a11 is read and those entries in the profit and loss statement and balance sheet of that record that are affected as updated. The group ID contained in that record identifies the group to which individual a11 belongs as group A₁, and so the record of group A₁ is read next. The entries in the profit and loss statement and balance sheet of group A₁ that are affected are then updated in the same fashion as the updates in the record of individual a11. The higher-order group ID contained in the record of group A₁ identifies the higher-order group to which group A₁ belongs as group A. The profit and loss statement and balance sheet of group A are thus updated in the same fashion as described above. Next, the record of organization K₁ is also updated in like fashion. Updates are likewise applied to the records of individual c11, group C₁, group C and organization K₁ in the same fashion. In this case, updates are applied twice to the record of organization K₁, once in the trail leading from individual a11 and once in that leading from individual c11, but since internal transactions cancel each other out, the following method may also be implemented.

By reading the record of individual all, reading the record of higher-order group A on the basis of the group ID found in the record of individual a11 and then reading the record of organization K₁, and by reading the record of individual c11, the record of group C₁ and the record of higher-order group C in like fashion, one may observe that these trails conjoin at the level of organization K₁. In this case, when the record of individual a11 is updated, the record of group A₁ and the record of higher-order group A are then updated. The records of individual c11, group C₁ and higher-order group C are updated in like fashion. Since individual a11 and individual c11 are both found to belong to organization K₁ and have therefore conducted an internal transaction, the record of organization K₁ is not updated for the amount occasioned by the internal transaction, but is updated by the means of computation of the main server 13 for the procurement and external discharge of funds that constitute an external transaction.

Although this description of updates applied to individual, group, higher-order group and organization records omits the involvement of group managers, the process may include attachment to group manager accounts of a fixed proportion of the sale made by an individual.

Updating and linking individual and group, and group and higher-order group, profit and loss statements and balance sheets (transformational example)
The foregoing example provides the groups and higher-order groups with their own profit and loss statements and balance sheets, but rather than providing the groups and higher-order groups with their own profit and loss statements and balance sheets, the particular profit and loss statements and balance sheets of groups and higher-order groups may be reckoned as the sums of the profit and loss statements and balance sheets of their constituent individuals, and the profit and loss statements and balance sheets of individuals alone maintained. However, when an individual is transferred between groups under this system, that profit and loss statement and balance sheet also move, so it is not much recommended.

Another possible implementation is to assign individuals IDs in journals, store the journals as raw data and aggregate the individual and group journals to calculate profit and loss statements when necessary.

While the foregoing example describes the updates applied to individual and group profit and loss statements and balance sheets as occurring in real-time, these updates may alternatively be performed as batch processes. However, since particular transactions would not then be identified in real-time, there is a possibility that transactions may be executed in excess of utilizable funds and such an approach is therefore not recommended.

### Example of individuals transferring between groups

The discussion below makes reference to Figure 3 in describing how transfers of individuals between groups are handled. Since all individuals, including group managers and higher-order group managers, have their own independent profit and loss statements and balance sheets, when an individual transfers between groups, when an individual becomes a group manager and when a group manager becomes a non-managerial group member, the transfer or change of status may occur with that individual's outstanding profit and loss statement and balance sheet intact by changing the group ID and member ID in the records affected.

Suppose individual a13 transfers from group A₁ to group C₁. If the groups and higher-order groups affected do not have their own profit and loss statements and balance sheets, simple replacements in the record of the individual are all that is required. This entails changing the group ID in the record of individual a13 from group A₁ to group C₁, deleting individual a13 from the structural record of group A₁ and adding individual a13 to the structural record of group C₁.

If the groups and higher-order groups do have their own profit and loss statements and balance sheets, the profit and loss statements and balance sheets of the groups and higher-order groups must be processed to assure their consistency. The departure of individual a13 fromgroup A₁ means that the account maintained there by individual a13 will no longer exist. Therefore, the items affected in the profit and loss statement and balance sheet maintained by individual a13 in group A₁ are subtracted by the means of computation of the main server 13 in the same fashion as in reversing journal entries. The means of computation of the main server processes the items affected in the profit and loss statement and balance sheet of higher-order group A in the same fashion.

On the other hand, the accounts of group C₁ and higher-order group C rise by the same amount with the addition of individual a13 to their ranks, and so that amount is added to the items affected in their accounts by the means of processing of the main server 13.

If the approach taken is that of assigning individual IDs in the journals, saving the journals as raw data and, as needed, aggregating member and group journals to calculate profit and loss statements, the calculations described above are not necessary.

When an individual transfers between groups, the profit and loss statement and balance statement maintained for the individual up to that point should continue to be used. Otherwise, that individual's record up to that point would be lost.

Some transfers spanning groups render part of an individual's assets unnecessary. In such cases, these assets should be transferred from the predecessor to the successor at a suitable price. Such transfers should be conducted in accordance with actual conditions rather than depending on book value alone. If 100, 000, 000 yen has already been invested in a software development project, for example, that body of work would have a superficial inventory asset value of 100, 000, 000 yen, but if the order is in fact priced at 100, 000, 000 yen and it will take another 30,000,000 yen to complete the project, the asset has a maximum value of 70,000,000 yen.

This will require the predecessor to bear a loss of 30,000,000 yen. If the individual's assets will cover this amount, no problem is presented; otherwise, it will be necessary for higher-order group managers or general managers to extend a loan and balance out the assets.

When an individual's assets turn negative and when it appears they may turn negative, a higher-order group manager or general manager should revise them promptly in the interest of the continuation of operations.

When a transfer occurs in the midst of an evaluation period, the individual moves with his profit and loss statement and balance sheet, but since the group to which that individual belonged loses the results of his activities, and particularly those in the profit and loss statement, it may not be possible to perform a consistent evaluation. In such cases, a method may be adopted of not modifying the entries in the group profit and loss statement and balance sheet even when an individual is transferred. In this case, the group profit and loss statements and balance sheets are not modified so discrepancies between their pre- and post-transfer figures will not arise.

Thus, the evaluation will be unbroken since the individual carries his own profit and loss statement and balance sheet, or his own journal, when transferring.

### Individuals belonging to multiple groups

The above example describes methods that are effective when individuals belong only to one group at a time, but when an individual belongs to multiple groups, the following measures must be implemented. Examples of an individual belonging to multiple groups include belonging secondarily to a committee or a study group, as well as belong to multiple groups.
When individuals belong to multiple groups, it becomes necessary for the individual to manage for multiple groups. Unless it is known which group activity an accounting transaction may be applied to, group profit and loss statements and balance sheets will not be created correctly even if the individual's profit and loss statement and balance sheet may be created.

One way of accommodating these circumstances is to include group IDs and activity IDs in journal entries, as well as individual IDs. This method allows identification of which group and which activity a journal entry is connected with, updating of the profit and loss statement and balance sheet of the group concerned and, if the group does not have a profit and loss statement and balance sheet, ascertainment of correct figures for the group by tabulating group records. It also makes it possible to tabulate activity records.

Thus including group IDs or activity IDs in journal entries is effective not only when individuals belong to multiple groups, but also when individuals belong only to one group at a time.

### Concrete example of record structure

Figures 7A and 7B illustrate records for the implementation described above. The records in Figures 7A and 7B are divided into three, but in practice these would be single records. The journal entry record for an individual is comprised of primary key (serial numbers), debit individual ID, debit group ID, debit activity ID, debit account entry, credit individual ID, credit group ID, credit activity ID, credit account entry, date, monetary amount, application and payee fields. (See (1) in Figure 7A for group A₁, and (2) in Figure 7A for group A₂.)
The journal entry record for group A₁ is comprised of primary key (serial numbers), debit group ID, debit activity ID, debit account entry, credit group ID, credit activity ID, credit account entry, date, monetary amount, application and payee fields. (See (3) in Figure 7A.) In this case the structural record of group A₁ lists the individual IDs corresponding to the primary keys, as shown in (4) of Figure 7A (primary key individual ID (a1), primary key individual ID (a11), primary key individual ID (a12) and primary key individual ID (a13) in the drawing).

The record for higher-order group A is comprised of group A₁ primary key (serial numbers), debit organization ID, debit activity ID, debit account entry, credit organization ID, credit activity ID, credit account entry, date, monetary amount, application and payee fields. (See (5) in Figure 7B.) In this case the structural record of group A lists group IDs corresponding to the primary keys, as shown in (6) of Figure 7B (primary key group ID (sa), primary key group ID (A1) and primary key group ID (A2) in the drawing).

The record for organization K₁ is comprised of debit supra-organization 1, debit activity ID, debit account entry, credit supra-organization 1, credit activity ID, credit account entry, date, monetary amount, application and payee fields. (See (7) in Figure 7B.)

These primary keys are multi-digit serial numbers assigned so as to specify the journal entry. The individual ID is a code that specifies the debit side and debit individual. The credit group ID identifies the group that individual a11 belongs to. The records shown assume the individual belongs to both group A₁ and group A₂. The debit account entry code is placed in the debit account entry field. Group C1, to which the placer of the order, individual c11, belongs, is placed in the credit group ID field. The credit account entry code is placed in the credit account entry field. The monetary amount of the journal entry is placed in the monetary amount field. The date, application and payee codes are placed in other fields. Unlike the previous example, here serial numbers are used for the primary keys because, since these are journal entry records, multiple records are generated for single individuals.

While the example described is of one-to-one journalizing, journalizing may also be one-to-n, n-to-1 or m-to-n journalizing. It is not recommended that m-to-n journalizing be applied in the system of the present invention. The reason is that this would cloud the correspondence between the debit side and the credit side.

If one-to-n or n-to-one journalizing is applied, the n side of the ratio may be subdivided and journals created in the quantity of n. In this case, the primary keys should be comprised of serial numbers plus branch numbers so that the original structure of the journal may be comprehended.

Debit and credit individual IDs, debit and credit group IDs, debit and credit activity IDs, debit account entries, credit account entries, dates and payees should be registered as alternate keys. Or, a single alternate key may be registered that combines multiple alternate keys.
While not indicated in the drawings, other information may also be added to the records.

Such an implementation makes it possible to perform evaluations of specific individuals, specific activities, specific groups and the like, but incurs the disadvantage of requiring more time due to the greater number of input fields than in conventional journalizing. This may be alleviated by devising appropriate screen interfaces. For example, lists of the activities and groups currently pertinent to the individual may be displayed to the individual placing an order, who may bring up the display relating to an activity or group by clicking once on the one that concerns him. He could then proceed to search for the destination of the order and place the order to fill in the credit information.

On the other hand, an individual filling an order would view the order information from the individual placing the order and fill in the necessary debit information by dragging the order information to add it to his activities. These steps are performed when placing and filling orders, but retaining the information will reduce the input time required considerably if it is used at the time of sale.

Conventional methods may be used to input application, or it may be selected from among predetermined information.

### Comparison with managerial accounting

Conventional managerial accounting uses the same account entries as financial accounting and creates financial statements specific to operational units by breaking single amounts up among operational units. This makes it possible to tabulate for individual account entries; taking the example of leasing fees, using subsidiary account entries makes it possible to have such subdivisions as for buildings, vehicles and office equipment, but not to identify which portions are utilized by any given activity.

On the other hand, the system of the present invention allows the creation of profit and loss statements and balance sheets for individual activities, as well as for individuals and/or groups, and enables their numeric evaluation by subdividing account entries into internal and external activities and using account entry groupings of three or more kinds, as necessary, and by performing individual and/or group accounting calculations.

External account entries may also be used for financial and tax accounting.

Individual organizations may freely determine their own internal account entries and their typologies. These should be considered intra-organizational principles of accounting and determined in accordance with the circumstances of the organization.

On the other hand, implementations of this preferred embodiment of the present invention that take the individual or group as the primary unit of evaluation may encounter problems with illegal copying, in particular of software. This requires the establishment of an organizational policy and the application of penalties.

The roles of groups and individuals, and examples of rendering activities as billables
The discussion following takes retailing as an example to describe the roles of groups and individuals in this preferred embodiment of the present invention. While retailing organizations exist in all sizes large and small, that assumed here is one with 100 to 1, 000 employees. The functions required of this f irm include sales, procurement, marketing, accounting, financial affairs, personnel and general administration. Other functions of a retailer might be inventory control and acceptance inspections. Note that this example merely points out the functions required of this organization without specifying the need for an organization of this kind.

Many companies place these functions with separate organizations, assigning a department or division manager to run each one. However, some organizations are bound tightly to specific individuals, which is not always efficient for the organization as a whole. Take a procurement manager as an example. Conventionally, a procurement manager orders and stocks product (while taking note of marketing opinions if there is also a marketing manager) . If the procurement manager does so appropriately, he will make a considerable contribution to the company's performance.

For example, a marketing division might makes sales by providing information to procurement. Aprocurement group might make sales by selling product to sales groups. General administration might own shops and make sales by leasing them to other groups or by providing various services. Personnel might make sales with insurance and other human resources services or by providing individual physical and mental health plans. A financial group borrow organization capital or loans and make sales by using those funds to settle accounts payable or purchase sales credits. Transactions between individual groups would thus be rendered billables.

In the profit and loss statements of commercial bookkeeping, gross profit is the difference between sales and the amount of goods purchased, and operating profit is that amount less operating expenses. A further subtraction of non-operating expenses gives ordinary profit, and the further subtraction of extraordinary losses gives pre-tax profit.

The method and system of the present invention applies such frameworks to particular individuals. Sales and procurement apply to a sales clerk in the same way they apply to the organization. Operating expenses include shipping expenses and packing fees. Personnel expenses are a large component of current expenses. Other costs include communications expenses and rent for land and premises. Other organizational expenses must also be borne. How they are borne will vary with the character of the organization, but some of the possible roles of an organization are mentioned below.

Possible organizational roles might include brand formation, credit functions, mutual support functions and constraint functions. Brand formation, of course, is the establishment among consumers of a favorable image, such as of trust in or aspiration to the organization itself or its products. Brand carries considerable weight in product selection. Credit functions entail the utilization of the organization's financial creditworthiness. In many cases the creditworthiness of an organization makes it possible to obtain a loan where an individual could not easily do so. Credit functions also make it possible to utilize the organization's own funds effectively within the organization and to make purchases "on a tab" as accounts payable. Mutual support functions enable individuals and groups with various functions to work together efficiently. Constraint functions prevent criminal activity, as well as the loss of profit to the organization as a whole.

### Distribution of sales

The discussion below describes the distribution of sales.

When an individual in a sales group makes a sale to a customer, for example, if the profit from that sale is reckoned as belonging to that individual, then the organization and the managers will have no income and the organization will not be sustainable. The creditworthiness of an organization and the appeal of its products account for much of what it takes for an individual within it to work effectively and require a certain minimum expenditure beyond the employment of that individual.

In this light, one possible implementation might work as follows. 50% of the remainder of cost of goods purchased subtracted from sales would be the income of the organization and 50% the income of the individual and group. Within the group, the group manager and individual would allocate income and expenses in accordance with a written policy statement agreed on at the time of the formation of the group. 10% of income might be reckoned to go to the group manager, for example.

Incorporating such contractual substance into the system generates journals automatically and is an effective way of simplifying journalizing and preventing error. A specific instance of such a system would be characterized, for example, by storing in the system a formula such that in the arithmetic for individuals a11, a12 and a13 10% of sales is reckoned as the sales of group manager A1, maintaining the logical structure of the contractual relationships between individuals as constituent members of an organization and/or groups comprised of one or more individuals as constituent members of that organization, and performing the calculations occasioned by the application of tools of accounting automatically on the computer system 11 on the basis of those contractual relationships.

This proportion may be fixed, but it is possible and, in fact, recommended to vary the proportions of organization and individual income in light of the operational environment obtaining at any given time. The reason is that when income temporarily falls due to poor market conditions, much of the drop would be shifted onto individuals unless that proportion is allowed to change, thus eliciting a fall in morale.

Naturally, if the proportion is allowed to change too readily, individuals will be guaranteed a constant income with little incentive to work harder when market conditions are poor, which is not a favorable outcome. The determination of this proportion is one of the most important jobs of a general manager.

As a concrete example, consider the following. Here, the amount accruing to the organization is that remaining after the amount of goods purchased is subtracted from sales, i.e. the amount of gross profit on sales.
Sales are 1,000,000 yen and procurement 700,000 yen, giving earnings of 300,000 yen.

50% of this 300,000 yen earnings is 150,000 yen, which goes to the organization. Likewise, the other 150, 000 yen goes to the group and individual. 10% of the share of the group and individual is 15, 000 yen, which goes to the group manager. The remaining 90%, or 135,000 yen, goes to the individual.

Out of this sum, 30,000 yen goes to the transport group, 5, 000 yen is sales of the financial affairs group for clearing expenses and 30,000 yen is sales of the credit group as a new credit extension, leaving 70,000 yen as the final profit of the individual.

While a new customer incurs a 30, 000 yen cost for a credit inquiry, an existing customer may require only 5,000 yen in credit extension charges.

When, as here, payment is made for a credit inquiry, the sales group individual charged with obtaining that information should have a choice of how to proceed. One way would be to carry out the credit inquiry himself. A second way would be to order it from an external source. A third way would be to order it from another group or individual within the organization. Even with this information, problems may arise and an allowance for doubtful receivables is therefore applied. This allowance should be carried by the organization as a whole, but if problems do in fact arise, a penalty should be borne in proportion to the damages incurred. Where a credit group handles credit affairs, the credit group should bear this penalty. Where a sales group or a sales group individual supplies the information from original research or from an external source, the sales group or sales group individual should bear the penalty.

Additionally, many tax laws require deferred depreciation; internally this should be handled by means of a one-time charge and realized in tax-effect accounting.

Likewise, transport should not be permanently assigned to an internal transport group, but must be open to outsourcing to an external provider of transport services or to another group within the organization.

Thus, there is a need to allocate a fixed sum or a fixed proportion of sales as organizational expenses in order to secure earnings, whether directly for capital maintenance or indirectly as the organization's divisible capital, and the way to do so is to incorporate these monies into current expenses.

The general approach to drafting profit and loss statements is to calculate expenses against sales, the balance of which is profit or loss, but profit and loss statements specific to individuals within an organization are handled as follows.

A budget is drawn up at the beginning of the accounting period. This represents no change from conventional methods, but conventional approaches have been mostly top-down and so rarely give due regard to the thinking of the group or individual executing the budget.

In the system of the present invention, each individual draws up his own budget, as a rule of thumb, and group managers draw up their group budgets. Personnel expenses are then added in and should be no greater than some fixed proportion of final profits. Otherwise, fluctuations in income may leave the organization in deficit. Additionally, the organization and the groups must decide in advance how to distribute final profit. In addition to monies to pay dividends and director's bonuses, the organization also requires a reserve fund of a certain minimum size against fluctuations in the business cycle, as well as funds for investment.

When income for some given accounting period is insufficient and wages are certain to fall, the funds required may be drawn down from the balance sheet to pay wages.

Accordingly, application of the present invention brings certain advantages.

In conventional systems, by far the most common response to a sudden increase in pressing work has been to request additional staff. Incentives are not in place to track down the cause of the problem, to eliminate unnecessary work or to devise more efficient ways of working. The reason is that evaluations of individual and group profit and loss have been ambiguous.

Given an implementation of the present invention, unless sales are certain to rise by some specif ied amount or proportion, adding staff to a group means increasing the denominator by which group profits are divided, and since the absolute sum of personnel expenses also rises, both individuals and the group see falling profits. Unless there is a guarantee that wages will not fall even with added staff, groups will not hasten to request additional staff. It goes without saying that personnel are both the greatest asset of an organization and its greatest expense.

The present invention similarly provides an incentive against outsourcing as a knee-jerk reaction, as well as incentive to compare costs carefully and elect to outsource when and where appropriate.

Since expenses for orders outsourced are the expenses of the individual placing the orders, they represent a direct decrease in the profit of that individual. On the other hand, outsourcing may be a way of increasing sales and increasing the profitability of the activity overall.

Planning decisions may be taken by individuals or groups in so far as capital for their execution is available on their balance sheets, but such decisions should be subject to approval by a direct superior (a group manager) and subject to review by the organization's auditing unit. This aids in preventing dishonest and irregular use of funds. Further, since these decisions are taken via a computer system, it becomes essential to establish a framework in which decisions that cannot be covered by the assets and liabilities, and profits and losses, of an individual or group cannot be implemented. With such a framework in place, taking a decision beyond the bounds of one's authority merely returns an error.

### Decision-making on assets

Such a framework requires means for the outcomes of decisions to be converted into assets. In the calculation of profit and loss, these assets become annual leases or depreciation expenses. Even if adequate profit may be forecast for a single year, it remains uncertain whether those assets can secure profits throughout their life cycle. In other words, funds must be fixed over the long term and assets must generate leases or depreciation expenses. Earnings on assets of this nature must not be calculated for a single year, but must cover all expenses through the term of the lease or the depreciation period. These expenses should be handled as conditionals within the calculation of individual and group assets and liabilities. While conventional accounting systems have also included depreciation in their reckoning of assets, they have deducted cash or cash equivalents in that amount, and it is to be welcomed that, with the introduction of international accounting standards, leases are coming to be treated in the same fashion. However, whereas long-term rentals do not differ substantially from leases, not even these international accounting standards will seek to convert these into assets. Thus, such long-term fixed liabilities are deducted from the calculated assets and liabilities of individuals and groups. Although the funds are in fact present, they are immobilized and, in this respect, are not included in the cash and cash-equivalent assets of the individuals or groups. However, since the residual value of these assets falls as the depreciation or lease payment progresses, some means is required to add that amount into the calculation of assets and liabilities.

Such an implementation makes clear what funds are available to individuals and groups and eliminates the utilization of funds beyond the limits of what is available.

Essentially, two methods are available for handling investments that cannot be covered by the assets of an individual. One is to hold them jointly with the group when they are covered by the group's calculated assets and liabilities. However, joint ownership requires specification of the equity held by each individual and the calculation of each individual's profit and loss and assets and liabilities. Another way is to apply for a loan from the organization, which requires a decision on the part of the general managers. "General manager", as used herein, refers to a manager of an organization K or a higher level of the hierarchy.

General managers take decisions on whether loans are turned to investment. They should also bear responsibility for the guarantee of those investments. This requires that the loss on an investment that does not produce results be replenished, in the end, from the balance sheet of the general manager and defines the responsibility of the general manager for the investment. On the other hand, the general manager may both acquire from individuals and group managers something like a commission of guarantee for investments for which he bears responsibility of guarantee and may gain a fixed proportion of the return on investment.

The profit and loss, and assets and liabilities, accounts of general managers should be handled as follows. The earnings of a general manager may be defined as some fixed proportion of the organization's pre-tax profits, but may also be defined, as described above, as counterpart to the guarantee of investments. A general manager's expenditures, which must be paid out of his own earnings, include expenses for functions required uniformly throughout his organization (e.g. accounting functions, IT units, auditing units). Thus, general managers must be enthusiastic about cost reductions since rising expenses constitute a direct reduction in their own share of profits.

Cost reductions carried too far, however, will find no one to bear responsibility for their ill effects and so appropriate funds must be committed to operations.

When a loan is extended, as in the example described above, the loan should be linked to the assets of the general managers. The assets of the general managers decrease when the loan is made, but are restored when the loan is recovered. Since the assets of the general managers also deteriorate if the loan becomes unrecoverable, they have due incentive to review the proposal carefully himself. The concern may be voiced that too stern an eye turned to loan applications may result in hardly any loans being extended at all, but since the organization's sales and profits will not grow in the medium and long term without investment, such overdue restraint too will resound directly in the profit and loss statement of too cautious general managers.

When opinion is divided among the general managers over whether to support a proposal, the loan may be extended from those supporting it alone. Such loans should be disbursed directly from general manager balance sheets. Although this increases the risk, income to the organization from the individual or group taking the loan flows only to those general managers taking this risk.

The system of the present invention offers a number of benefits where, as in many companies, general managers also serve as board members or executive directors. In conventional methods of selecting board members, the most information shareholders have on the candidates is rarely more than a personal history listing past job descriptions and titles, making it exceedingly difficult to identify the most appropriate persons to serve on the board. Given an implementation of the present invention, each candidate would have a profit and loss statement and balance sheet, and their balance sheets would provide a record of their positions on past investments. Comprehending the significance of this investment record and its specific proposals, shareholders would then be able to judge the suitability of individual candidates. Given one candidate with a balance sheet with few assets of any note and a profit and loss statement showing almost no profit in the past, and another with a rich balance sheet and a profit and loss statement with considerable past profit, shareholders would be clear on which is the better choice as board member.

Group manager profit and loss statements and balance sheets should also be published, like those of the general managers. Thoroughgoing review by general managers is one way of preventing the emergence of unqualified group managers, but such reviews should be held to a minimum and individuals select group managers on the basis of their profit and loss statements and balance sheets published to individuals within the organization. Such a procedure allows both the selection of persons appropriate to the post and the selection of individuals reckoned by the constituent members of groups to be desirable managers.

### Determination of cost price

Conventional models of cost finalization have suffered from the drawback of the need to calculate proportions and allocations; even if profit and loss statements and balance sheets are updated in real-time, large portions of allocations must be recalculated subsequent to provisional tabulation, and there is a considerable lag until the numbers are finalized after closing accounts, in addition to which profit and loss statements and balance sheets are not created until after the closing of accounts on a monthly or other schedule. An implementation of the present invention would express all internally and externally directed activities of the organization as accounting transactions or billables and therefore make it possible to ascertain the outcome of individual and group activities, and to finalize cost, in real-time.

Specific example of performing evaluations with profit and loss statements and balance sheets
One application of profit and loss statements and balance sheets to conduct evaluations is as follows. The profit and loss statement should be the principle tool for performing evaluations. The balance sheet should be used as a secondary tool of evaluation and for judging whether some given operation should continue or examining the qualities of a group manager.

Assume the following profit and loss statements for individuals A, B and C.

### Individual A

Sales 20,000,000 yen
Expenses 5,000,000 yen
Profit 15,000,000 yen

### Individual B

Sales 30,000,000 yen
Expenses 10,000,000 yen
Profit 20,000,000 yen

### Individual C

Sales 25,000,000 yen
Expenses 11,000,000 yen
Profit 14,000,000 yen

This example gives profit prior to the deduction of the individual's pay. Individual B has the largest profit, a figure 1.33 times that of individual A. Individual C has the second-largest sales, but with high expenses his profit is lower than that of individual A. Using these figures is one way of determining pay, bonuses and other remuneration.

This constitutes a method of proportioning capital to the profits of specific individuals or otherwise allocating it by means of some uniform function.

Individuals' pay may be further deducted to calculate profit. Profit will then fluctuate with individual pay. In other words, it will facilitate the identification of individuals with low profit but high pay.

In such cases, the amount of pay is predetermined, and bonuses are determined by proportioning the bonus capital to the profits of specific individuals or otherwise allocating it by means of some uniform function.

Some uniform function may also be applied to the current base pay and profit of each individual when determining the amount of pay in the subsequent period.

Since profit and loss, and balance sheet, calculations are performed individually, individual profit and loss, and assets and liabilities, maybe ascertained on a weekly, monthly, quarterly, biannual or annual basis, providing a clear assessment of individual performance over such periods.

Furthermore, saving individual-group and group-group relationships chronologically allows one to perform time-series analysis in order to evaluate particular groups.

Implementation of the present invention requires that careful attention be paid to certain aspects.

A faulty implementation of the present invention may lead to runaway worst practice. One example would be false economies in transport infrastructure. Rational cost reductions are a fine thing, but cost reductions lacking rationality may lead, with a high probability, to safety problems and poor operating ratios. These are major problems for an organization. The biggest problem is the damage that accidents cause to brand image and the resultant loss of custom. This applies as well to instances of conventional business management in which a company ignores customer complaints in the pursuit of short-term profits. Organizations require auditing functions in order to avoid these situations. They also require means for general managers to confer awards for whistleblowing. They also require means to apply fines or penalties (confiscations) to individual or group balance sheets for irrational, false economies.

In some views, the exchange of information between individuals should also be subject to pricing and compensation. One solution is to regard minor exchanges of information as small-change loans between individuals not subject to formal accounting.

Individuals newly brought into an organization implementing the present invention would start with zero capital. The profit and loss statements and balance sheets of such individuals might thus run negative, but the system remains operable by permitting them to take out loans up to some prescribed limit.

Descriptions follow of two specific implementations of the present invention that provide methods of determining the pay and retirement or severance pay of individuals on the basis of their calculated prof it and loss, and assets and liabilities.

### Determining individual remuneration

In the process of determining the pay of individuals, first at the end of an accounting period draw up individual budgets for the subsequent accounting period. Group managers then compile their group budgets on the basis of these individual budgets, and higher-order group managers compile their higher-order group budgets on the basis of those lower-order group budgets. Group managers should provide advice to individuals on their budgets as part of this process. It is especially important to confirm the reasons behind the success of dramatically overachieving projects and to revise these to reasonable levels.

The preceding discussion described a method of determining the amount accruing to the organization as that remaining after subtracting the amount of goods purchased from sales, i.e. the amount of gross profit on sales, but here we describe a method of determining remuneration and the amount accruing to the organization from that remaining after subtracting the amount of goods purchased, costs and expenses from sales, i. e. the amount of ordinary profit before deducting personnel expenses. Some workarounds are required when using this method since sales are often generated at different points than are costs and expenses. In other words, it may not be possible to finalize the amount of operating profit before deducting personnel expenses at the point sales are generated. Therefore, the method requires that the amount accruing to the organization be found by performing the subtraction with a predictive value and settlement effected at the point costs and expenses are finalized.

First forecast sales and incoming stock, for example, and then forecast costs and expenses. Subtract the amount of goods purchased and costs from sales, as well as the share of the group manager if such exists, and call the resulting amount W. If 50% of W is costs for organizational maintenance, W x 0.5 = X, which is the individual's share. That individual's monthly pay, then, is one-twelfth of half of X. The other half of X is allocated for bonuses and profit adjustment. "Profit adjustment" refers to the deduction from the share of an individual of the sum required to compensate for profits forecast but unrealized. Conversely, when profits exceed a forecast, that amount is allocated as a bonus to the individual, but if the full amount is thus allocated as a bonus, the capitalization of the balance sheet of the individual does not see an increase. One way of handling this anomaly is to reserve a fixed proportion of the amount in excess of forecast profit as accrued retirement benefit or severance indemnities. Another approach is to convert profits into capital, but in many legal systems the amount available for acquisition as capital is that remaining after tax, making this method less favorable from the viewpoint of overall optimization of resources. Such legal systems often allow retirement benefit and severance indemnity reserves to be tax-deductible. That portion of profit thus allocated for retirement or severance pay is thus utilized as the capital of the individual and payment of it made to the individual upon retirement or severance, since it is after all retirement or severance pay.

An individual who generates a great deal of profit builds up capital. This capital may then be turned to investment, or it may be treated as the retirement or severance pay of the individual in lieu of investment. However, it is generally recognized that investment is necessary in order to achieve a certain level of profit.

In this example, the pay of the individual is subtracted as gross, and greater granularity may be achieved by doing so for individual activities. Consider the following example.

### Activity J

Sales 2,000,000 yen
Costs 1,200,000 yen
Profit before deducting pay 800,000 yen

### Activity L

Sales 1,500,000 yen
Costs 100,000 yen
Profit before deducting pay 1,400,000 yen

In this case, the monthly pay from Activity J is 400, 000 yen and that from Activity L 700,000 yen. If sales and profit have monthly fluctuations, payment may be made of the amount of pay initially planned and the balance treated as the profit of the individual.

The retirement or severance of an individual with negative assets would require the payment of debt, but the organization should accept this possibility as a risk rather than demanding payment of that debt by the individual. It would be reasonable and appropriate in such a case not to make payment of retirement or severance pay.

Although cash and cash equivalents are easily handled on the retirement or severance of an individual with positive assets, tangible and intangible fixed assets should be transferred to that individual' s successor at a suitable price. To offset the concern that this occasion might be seized to beat down the price of such assets, the departing individual would be able to lend or lease them to the successor individual or the group or the organization at a suitable price or to utilize them as a sort of pension.

Remuneration will include monthly pay and bonuses and special bonuses, but fringe benefits (non-wage pay) should also be counted as remuneration. Although such fringe benefits as stock options, rights to the use of company recreational facilities and use of company cars are not counted as pay, their provision entails costs.

The organization should also provide insurance functions. A strict implementation of the present invention to determine individual pay would deprive of income an individual unable to work due to illness or injury. Provision of an insurance function to all individuals within an organization such that those individuals are levied a monthly "insurance premium" and individuals who suffer illness or injury are guaranteed an income under certain conditions would prove an effective means for an organization to attract capable individuals to its employ.

To sum up, the following two systems of evaluation are ways of implementing the present invention, as described above, in concrete form.
The first system of evaluation applies tools of accounting to the internally and externally directed activities of an organization and evaluates the individuals that are constituent members of that organization and/or groups made up of one or more individuals that are constituent members of that organization on the basis of the output of a computer system that has as its inputs those tools of accounting; that computer system expresses the internally and externally directed activities of those individuals and/or groups in terms of accounting, and determines the pay of those individuals on the basis of the profit and loss, and assets and liabilities, thus calculated, of those individuals and/or groups.
The second system of evaluation applies tools of accounting to the internally and externally directed activities of an organization and evaluates the individuals that are constituent members of that organization and/or groups made up of one or more individuals that are constituent members of that organization on the basis of the output of a computer system that has as its inputs those tools of accounting; that computer system expresses the internally and externally directed activities of those individuals and/or groups in terms of accounting, and determines the retirement or severance pay of those individuals on the basis of the profit and loss, and assets and liabilities, thus calculated, of those individuals and/or groups.

In such cases, tax must be paid from pre-tax profit and a method for allocating final profit requires some degree of planning. Tax payments should be expensed from the profit and loss statement of the organization without drawing on the profit and loss statements of individuals. The reason is that 50% of funds may be expensed from individual profit and loss statements for organizational maintenance and the remainder regarded as the shares of the individuals. Naturally, this may be determined by individual organizations.

Where tax payments are thus made from costs for organizational maintenance, particular individuals may have profits and losses. It is also necessary to calculate those portions of individuals' surpluses that may and may not be reserved under tax law.
The amount of tax may thus be determined upon calculation of the whole. If the amount of tax bloats unexpectedly due to the large surpluses of individuals, it may be required to take such steps as allocating it as a settlement bonus.

Whereas conventional organizations suffer from irregularities involving tampering with accounts and misappropriation of funds for personal use, the system of the present invention provides a framework that inherently facilitates the elimination of such practices. Since expenses are made from the profit and loss statements and balance sheets of the individuals that are constituent members of the organization, irregular use of monies would only add to that individual's expenses and detract from this (share of) profit. However, since a fixed proportion of profit must be allocated to the organization, the individual would see greater profit if he were to embezzle the full sum reported as expenses. Therefore, group managers must fulfill the function of overseeing the regularity of individuals' reported expenses.

While views differ of what constitutes an irregular deduction, activity-specific income and expenditure are evident in real time and the relationship between assets and liabilities is also evident. If an activity suffers poor profitability and an individual or group is in danger of going into the red, there will be little profit on the profit and loss statement of that individual or group and, if it is in the red, internal cash on the balance sheet will fall, so it is possible to disallow expenditure in excess of internal cash.

Indices may thus be presented for examining individual, group leader and activity profit and loss statements andbalance sheets, checking and scrutinizing their content when in excess of some fixed proportion, and determining whether to continue or terminate.

It may also be decided whether to continue or terminate an activity through comparison with an activity or group budget that is preserved. If some given project is planned to have group leader sales of 100,000,000 yen and costs, including payments to individuals, of 80,000,000 yen, an alarm may be sounded when costs approach 80,000,000 yen.

The greatest task of the group manager is to construct a business model for his group. He must describe to the individual members of that group and assure their understanding of what the group seeks to accomplish, what its targets are, what its activity policy is, how it will achieve sales and profits, and much else. He must also assure that higher-order managers and general managers understand this business model.

The next-greatest task of the group manager is to support the individual members of his group in their work. His advice, guidance and job assignments must all seek to maximize this support. In the conventional model of organizational operation, superiors give orders to subordinates and evaluate their performance. Many organizations use a five-level system of evaluation to distribute pay rises and bonuses, one that asks how to divide up a pie of fixed size. The result has therefore been that however hard some given individual member of a group works, his bonus will hardly be greater than that of other individuals of equivalent rank.

The system of the present invention links the pay and bonuses of the individuals explicitly to the profit they generate and is therefore capable of distributing pay and bonuses in accordance with the results achieved by the individual constituent members of an organization, more closely tying effort with output with reward. Since individuals need not compete among themselves for some portion of a fixed-size pie, group managers may provide advice and guidance so that individuals will achieve the best results they are capable of.

Personnel divisions and other such organizational units have conventionally conducted minute evaluations of individuals and taken decisions on what jobs to assign them to; the systemof the present invention almost entirely obviates the need for such a function, requiring rather the support of individuals for important work to be performed. In conventional systems, individuals have often attended seminars and training courses at the order of a superior or a personnel division, for example, and it has not been unusual for the content of such activities to be unsuited to the individual. Such individuals have often attended with little motivation and a notion that they had no influence over this use of their time, with the result that they gained nothing substantial from the experience. In the system of the present invention, the focus of a personnel division or other staff management unit should be to provide individuals within the organization with advice on which available courses will provide themmedium-and long-term advantage in enhancing their own skills. The job of such a group would be to sell this service to individuals that are constituent members of the organization. Conversely, only individuals with suitable professional skills will be able to provide such services.

The sales of a general manager should be proportional to the profit of the organization. Those items deducted from the sales of a general manager are expenses for functions that maintain the operational viability of the organization as a whole, and that individual's own expenses and pay. Given a proportional relationship between the sales of the general managers and the profit of the organization, there is a possibility that the expenses of general managers qua individuals and expenses for functions that maintain the operational viability of the organization as a whole alone may place the organization in deficit when profits fall, but general managers' pay will conversely rise by wide margins if profits grow.

Concern is likely to arise that implementation of the system of the present invention maymilitate against the conduct of long-term research and development. Long-term research and development is difficult to understand from outside an organization. Its successes are apparent only after many years, and some research proves to be entirely misguided. Researchers in the conventional system have secured and spent research and development budgets in a confused and disorderly fashion.

Where research and development is conducted by a single group, the system of the present invention may be applied in a number of ways. One is for a manufacturing group or groups to be the customer of the R&D group, in which case the R&D group manager would determine the distribution of resources and profit within that group.

Another way is for each individual within the R&D group to have a manufacturing group or groups as a customer or, without any customers, for a general manager to recognize the need for some given R&D project and provide funding from his individual profit and loss statement and balance sheet, in which case the contract to do so may specify, for example, that half of the sales generated by that project are to be sales of that general manager if the project proves successful.

Even so, some R&D projects do not show results within the time frame of a single year. In such cases, the researchers' pay may be found within funds expensed for the proj ect by general managers and group managers. In such cases, the general managers, group managers and researchers should enter in advance into a contract governing the distribution of any proceeds resulting from the project. If none such are forthcoming, the portion of project expenses that constitute researcher pay may be reckoned as liabilities of the researchers themselves, or it may be borne by the general managers and group manager. This may apply to a single researcher or to multiple researchers. Where multiple researchers are engaged in such a proj ect, their individual authority and responsibility should be determined among them.

General managers and group managers would come to value researchers who produce results in a relatively constant rate and those who produce significant results, albeit more inconsistently. On the other hand, they would tend to avoid researchers who produce no results at all.

Researchers who want to pursue an unpromising course but cannot find a sponsor for it may do so individually where time in their schedules so allows, in which case any results of that research should belong to the organization and that individual researcher.

Decisions on the continuation of individual and group activities should be taken as follows. Profit and loss statements and balance sheets should be reviewed at opportune intervals. If profits are falling and assets on the balance sheet have fallen below some prescribed limit, the group manager, higher-order group manager and general manager should meet with the individual to discuss recovery plans and provide advice, and also to take a decision to terminate the activity if no remediation is evident. This process relies on the review of the individual and group profit and loss statements and balance sheets available under the system of the present invention.

Although some groups are comprised of job descriptions of identical or similar function, this is not a requisite property of a group, which may be comprised of individuals with widely differing jobs who together perform a coherent stream of work. This is applicable to both large and small groups. Even in retailing, for example, a small groupmayperform all functions from procurement through sales and transport of a particular class of product, and in an assemblage of groups (or a supra-group) similar functions may be bundled together under a single group manager.

Such an implementation of the system of the present invention gives rise to issues of what functions are shouldered by the organization and what relationship the organization has with the individuals who are its constituent members. The most important of the functions of the organization are as follows.

First, the organization institutes and standardizes a system. Administration that is not arbitrary or governed by personal whim requires criteria and standards, which must be as simple as possible.

Second, the organization must provide functions that coordinate profit strategies and assets so as to avoid overdue concentration on the pursuit of short-term profits. Even so, the overdue pursuit of short-term profit by individuals and/or groups may lead to mishaps in the medium and long term that incur the latent danger of damages due to injury or loss of trust. The organization must provide functions to offset such tendencies.

Third, the organization must provide brand recognition. Brand recognition is of such importance that it should require no explication here. It does, however, differ from what may be achieved by individuals and small groups.

Fourth, the organization must provide functions for coordinating between and among individuals and groups. The concept of fallacy of composition instructs that while individual components of a whole may each behave rationally, that property may be missing from the whole. Furthermore, it is often the case that groups acting in coordination are more effective than all of them acting disparately.

Fifth, the organization must provide financial functions. There are limits to the funds available to individuals and groups independently. Additionally, surplus funds are controlled at the level of the organization. Individuals and groups requiring funds they cannot raise on their own procure them with the backing of the organization.

Sixth, the organization mediates confrontation between groups and settles disputes among them.

Seventh, the present invention provides scope for cash flow accounting, as introduced with international accounting standards. The creation of individual and group cash flow statements is of utility in extending the objects and advantages of the present invention.

### Methods of evaluation based on point systems

The discussion below is of methods of evaluation based on point systems.

The preferred embodiments described above apply methods that make use of profit and loss statements and balance sheets. Simpler embodiments of the present invention may implement other means of quantification, such as a point system.

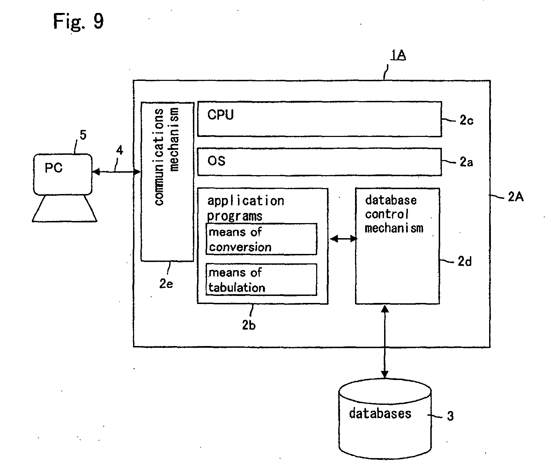

Such methods of evaluation of individuals, groups and individuals and groups within an organization may be implemented with the computer system illustrated in Figure 9.

Figure 9 is a block diagram of a computer system implementing a system of evaluation employing a point system and is a preferred embodiment of the present invention. Where the computer system illustrated in Figure 9 that implements a system of evaluation employing a point system differs from the computer system illustrated in Figure 1 is in its allowance for a means of conversion 7 and a means of tabulation 8 instead of the means of computation implemented in application programs. Since it does not differ in other respects, the same numerical references have been used and further description is omitted herein.

A system of intra-organizational evaluation is implemented in the computer system 1A by rendering the internally and externally directed activities of an organization as billables and performing intra-organizational calculations on the basis of the results of quantification.

The servers 2A of the computer system 1A are provided with a means of conversion 8 that renders and billables and quantifies the internally and externally directed activities of individuals, groups and individuals and groups within the organization and a means of tabulation 9 that tabulates the converted values of the individuals and groups on the basis of the results of quantification, and is arranged to evaluate individuals and/or groups within the organization on the basis of the results of that tabulation.

Evaluations according to this system of evaluation are conceptually similar to reckoning particular activities as billables or accounting transactions, and would work as follows. Points are input to the server 2A of the system of evaluation for each activity conducted, and sales and expenses calculated on the server 2A and the balance thereof reckoned as profit and added to individual or group accounts. The unit of reckoning need not itself be monetary: one "point" may be a unit representing 1,000 yen, for example.
Say some individual fills an order for computer software installation for a fee of 30,000 yen. While the sale amounts to 30,000 yen, if filling the order incurs an expense of 10,000 yen for purchase of the software and the aid of another individual entails a payment of 6,000 yen, the individual filling the order has a profit of 14,000 yen. At 1,000 yen per point, that individual thus earns 14 points calculated on the server 2A, which figure is added to his account on the server 2A.

When expenses exceed sales, points are subtracted by the server 2A from the accounts affected.

Such expenses as the pay of the individual, his rent and depreciation costs should be subtracted in weekly, monthly or other comparable totals.

When managing accounts in this fashion, activity nomenclature, temporal definition and the like should be handled as accessory information. Appending this information makes it possible to determine what particular figures in account records are derived from.

Given such an implementation, the figures for the individuals making up a group may be summed to determine the figure for the group comprising them.

While such a system lacks an element corresponding to the balance sheet in the preferred embodiments described above, evaluations for some given period of time may be performed on the basis of figures describing that period, and totals may be stored of those figures for each such period and regarded as a convenient and simple representation of assets. One exemplary advantage of such a system is that a large negative total may serve as a warning when assigning personnel to an important job.

Otherwise, such embodiments of the present invention would implement the distribution and acquisition of work in the same fashion as an embodiment applying profit and loss statements and balance sheets.

The following system of evaluation represents an embodiment of the foregoing description.

This system of evaluation is a system for evaluating individuals as constituent members of an organization and/or groups comprised of one or more individuals as constituent members of an organization by rendering the internally and externallydirectedactivitiesoftheorganizationasbillables in which the server 2A of the computer system 1A quantifies the internally and externally directed activities of the organization by rendering them as billables and evaluates individuals as constituent members of an organization and/or groups comprised of one or more individuals as constituent members of an organization on the basis of the results of that quantification.

Determination of pay, retirement or severance pay and other remuneration on the basis of a point system
The discussion below treats the determination of the pay, retirement or severance pay and other remuneration of individuals on the basis of a point system. A system that implements these methods is also discussed.

Since, unlike the preferred embodiments discussed at length above, such a point system does not provide profit and loss statements and balance sheets, it requires some other method of determining such amounts.

The pay system may be one of annual salaries, fixed wages or some other system.

The point system that is a preferred embodiment of the present invention quantifies the outcomes of particular activities. A 1,000 yen value may be reckoned as one point, for example. These points correspond to the gross profit of the organization.

Of such points accumulated, 60% may be the retained income of the individual and 40% the income of the organization. In a regime of fixed wages, say some given individual has an expected annual income of 10,000,000 yen.

If that individual accumulates 16,666 points, his retained income (16,666 x 1,000 x 0.6 = 10,000,000) matches this expected annual income.

If that individual accumulates fewer than 16, 666 points over the course of a year, an amount equal to 0.6 times the difference from 16, 666 may be deducted from his year-end bonus. If that individual accumulates more than 16,666 points over the course of a year, an amount equal to 0. 6 times the difference from 16,666 may be added to his year-end bonus. Some organizations may find it undesirable, in the interest of stability, to apply such a system with such immediate linkage as to rises and falls in monthly or weekly pay, but points accumulated may serve as an indicator when determining a fixed wage for the subsequent year.

In a system of annual salaries, annual bonuses may and should be made subject by contract to rise and fall. Where such is not possible, points accumulated may serve as an indicator when contracting salaries for the subsequent year.

The specific rates of return and their reflection in pay and bonuses described herein are provided as examples only. Those skilled in the art will readily appreciate that particular organizations may determine with flexibility what rates of return to apply and how to gear these to bonuses and weekly, monthly or other periodic pay.

Retirement or severance pay may be determined as a calculation from total points accumulated during the period of employment. One method of performing this calculation is to subtract from the total points that amount already retained by the individual and reckon as retirement or severance pay some fixed proportion of the remaining sum.

Operation on a computer system of the decision process and calculation methods described above enables implementation of the following two systems of evaluation.

The first system of evaluation implements a method of determining remuneration. This first system of evaluation renders the internally and externally directed activities of an organization as billables and evaluates individuals as constituent members of an organization and/or groups comprised of one or more individuals as constituent members of an organization on the basis of the output of the server 2A of the computer system 1A illustrated in Figure 9 (or the main server 13 of the computer system 11 illustrated in Figure 4) that takes these as inputs, which server 2A of the computer system 1A illustrated in Figure 9 (or the main server 13 of the computer system 11 illustrated in Figure 4) calculates and quantifies the internally or externally directed activities of the constituent members of the organization and/or groups comprised of one or more individuals as constituent members of the organization and determines the amount of remuneration of those individuals on the basis of those results.

The second system of evaluation implements a method of determining retirement or severance pay. This second system of evaluation renders the internally and externally directed activities of an organization as billables and evaluates individuals as constituent members of an organization and/or groups comprised of one or more individuals as constituent members of an organization on the basis of the output of the server 2A of the computer system 1A illustrated in Figure 9 (or the main server 13 of the computer system 11 illustrated in Figure 4) that takes these as inputs, which server 2A of the computer system 1A illustrated in Figure 9 (or the main server 13 of the computer system 11 illustrated in Figure 4) calculates and quantifies the internally or externally directed activities of the constituent members of the organization and/or groups comprised of one or more individuals as constituent members of the organization and determines the amount of retirement or severance pay of those individuals on the basis of those results.

### More effective application of point systems

The system described above as an example of how to quantify the results of individual activities suffers from the drawback that, while results are readily evident, actual activity is not.

Say some individual fills an order for computer software installation for a fee of 30,000 yen. While the sale amounts to 30, 000 yen, if filling the order incurs an expense of 10,000 yen for purchase of the software and the aid of another individual entails a payment of 6,000 yen, the individual filling the order has a profit of 14, 000 yen. These expenses are tabulated together with the amount of the sale.

Storing these details rather than merely the results of the activity makes it clear how the result of some particular activity came about.

Other accessory information and such information as may be used to substitute for balance sheets is handled in the same fashion as the example of the point system described above that is a preferred embodiment of the present invention.

Pay, bonuses and other remuneration are determined in the same fashion as the example of the point system described above that is a preferred embodiment of the present invention.

In all implementations of the preferred embodiments of the present invention, detailed descriptions of the activities should be stored together with the numerical expressions of those activities when their results are quantified. Such information should include a description of the activity, contractual conditions, the term of the activity, the amount of sales generated, a statement of expenses and other such relevant information. Storing such information for later reference allows adequate response to protestations by an individual that the final quantification of an activity is inaccurate or unrepresentative, or to questions raised by a general manager with respect to such quantification. Such information may also aid in deciding whether an individual is appropriate to serve as a group manager, by examining that individual's past record.

Effective systems of evaluation employing point systems may be implemented by applying the decision processes described above on the server 2A of the computer system 1A illustrated in Figure 9 (or the main server 13 of the computer system 11 illustrated in Figure 4).

Any one of the systems of evaluation described above may be utilized implement computerized systems that conduct profit and loss management for individuals as constituent members of an organization and/or groups comprised of one or more individuals as constituent members of an organization.

As discussed above, since journals contain at least an individual ID, activity ID and group ID, journals may be tabulated to ascertain the sales, expenses and profit of each individual, each activity and each group. Maintaining a profit and loss statement and a balance sheet for each individual and each group and updating them with the journals generated makes it possible to ascertain their assets and liabilities, in addition to profit and loss, and to facilitate decisions on whether or not to continue an activity.

Utilization of the system of the present invention in this fashion facilitates the profit and loss management of individuals and/or groups and/or activities.

Results thus obtained from these individualized profit-and-loss and asset-and-liability calculations may further serve as useful reference material in the context of headhunting or of organization merger or acquisition. While group profit and loss statements and balance sheets have merely stated profit-and-loss and asset-and-liability positions at the group level and have been opaque with respect to the constituents of a group, the system of the present invention makes the personal contributions of the constituent members of these groups clear in numeric terms and therefore allows evaluation of the human resources that are valuable assets of these groups.

### INDUSTRIAL APPLICATIONS

As detailed above, the method of evaluation of the invention of Claim 1 quantifies the internally and externally directed activities of an organization as billables, stores these values in databases and evaluates the individuals and/or groups within the organization on the basis of the values accumulated in those databases, thereby enabling objective evaluation of individual and group activities, and thus screening operational tasks carefully, bolstering work activities that relate to profits and maximizing profit to the organization, eliminating inconsistent subjective understandings of the evaluation process held by evaluators and evaluees within the organization, and achieving genuine meritocracy.

The method of evaluation of the invention of Claim 2 quantifies the internally and externally directed activities of an organization as accounting transactions, stores these values in databases specific to each individual and/or group and evaluates individuals and/or groups within the organization on the basis of the values accumulated in these databases, thereby enabling objective evaluation of individual and group activities, and thus screening operational tasks carefully, bolstering work activities that relate to profits and maximizing profit to the organization, eliminating inconsistent subjective understandings of the evaluation process held by evaluators and evaluees within the organization, and achieving genuine meritocracy.

The method of evaluation of the invention of Claim 3 stores in databases profit and loss statements and/or balance sheets for each individual and/or group in an organization, uses either or both to maintain their accounts, reflects the internally and externally directed activities of the organization in these database accounts as billables or accounting transactions, and reflects income and/or expenditure accruing to or generated by individuals and/or groups in the several accounts in these databases and uses the member and/or group profit and loss statements and/or balance sheets reflecting these account calculations to evaluate individuals and/or groups, thereby enabling objective, fair and transparent evaluations, linking the profit of individuals with the profit of the organization and manifesting the ambition to increase profits, and so motivating the organization.

The system of organizational evaluation of the invention of Claims 4, 5, 6 and 11 quantifies each activity of individuals as constituent members of an organization and/or groups comprised of one or more individuals as constituent members of an organization by quantifying them as accounting transactions or as billables, calculates profit and loss on the basis of those values and evaluates these individuals or groups in the organization on the basis of those profit and loss figures, thereby enabling the following advantages:
(1) The performance of any given individual is manifest to anyone;
(2) The expression of performance evaluations in concrete numerical form, therefore eliminating variation in evaluation and enabling fair and impartial evaluations;
(3) Greater overall operational efficiency of the organization through the elimination of unnecessary expenses; and
(4) Providing incentives for personnel with abilities intimately related to the operational activities of the organization to join and remain with it, as individuals find it necessary to market themselves at high prices.

The system of organizational evaluation of the invention of Claim 7 quantifies individual or group activities via a means of computation that quantifies the activities of groups comprised of individuals or groups comprised of one or more individuals and determines amounts of remuneration on the basis of the values obtained, thereby determining amounts of remuneration that are related to the contribution that individuals make to profits and thus enabling decisions on amounts of remuneration that are rational to managers and individuals.

The system of organizational evaluation of the invention of Claim 8 applies tools of accounting to the internally and externally directed activities of an organization, performs accounting calculations on the internally and externally directed activities of individuals as constituent members of the organization and/or groups comprised of one or more individuals as constituent members of the organization, and determines the amounts of remuneration of individuals on the basis of individual and/or group balance sheets and profit and loss statements, thereby determining amounts of remuneration that are related to the contribution that individuals make to profits and thus enabling decisions on amounts of remuneration that are rational to managers and individuals and that are suited to the contributions of the individual.

The system of organizational evaluation of the invention of Claim 9 renders the internally and externally directed activities of an organization as billables, performs accounting calculations on the internally and externally directed activities of individuals as constituent members of the organization and/or groups comprised of one or more individuals as constituent members of the organization, performs quantification on the basis of the balance sheets and profit and loss statements of these individuals and/or groups, and determines the retirement or severance pay of these individuals on the basis of assets in their balance sheets, thereby determining rational retirement or severance pay that is suited to the contribution of the individual.

The system of organizational evaluation of the invention of Claim 10 performs accounting calculations of the internally and externally directed activities of individuals as constituent members of the organization and/or groups comprised of one or more individuals as constituent members of the organization, and determines the retirement or severance pay of these individuals on the basis of the results contained in individual and/or group balance sheets and profit and loss statements, thereby determining rational retirement or severance pay that is suited to the contribution of the individual.

The computer system of the system of evaluation of the invention of Claim 12 is provided with databases that define internal transaction account entries capable of determining internal transactions and external transaction account entries used for financial accounting and/or tax accounting, means of reflecting the internally and externally directed transactions of an organization in the internal transaction account entries and the external transaction account entries, means of calculating the profit and loss statements and/or balance sheets of individuals and/or groups within the organization, and means of performing evaluations of the individuals and/or groups on the basis of the results obtained from these means, thereby enabling objective, fair and transparent evaluations, linking the profit of individuals with the profit of the organization andmanifesting the ambition to increase profits, and so motivating the organization.

A summary follows of the objects and advantages of the present invention as detailed above.
1. Profit and loss statements are used in evaluations covering a full accounting period. Each such period therefore restarts the totals at zero. Earlier evaluations are thus not carried forward to later periods, enabling suitable evaluation.
2. Evaluations are performed for individual activities and are ascertained in real time, thus requiring little time for evaluation.
3. Sales, costs and profit may be ascertained for individual activities, lowering the possibility of differences of opinion between evaluators and evaluees.
4. A wide variety of activities are subject to evaluation, eliminating the abuse of cheerleaders gaining high evaluations.
5. The interests of individuals are in line with those of their groups and the organization, boosting the morale of individuals.
6. Since the figures that have built up an individual or group balance sheet are accessible, past activity performance is readily discernible. This also facilitates investment decisions.
7. The relationship between evaluators and evaluees becomes cooperative, rather than confrontational.
8. Since income and expenditure is effected through profit and loss statements and balance sheets, the income and expenditure of individual activities is available in real time and the relationship between assets and liabilities made evident. Should a given activity go into the red, exceeding the assets of individuals and the group manager, further income and expenditure may be disallowed. Checking on the profit and loss statements and balance sheets of individuals, group managers and activities in this fashion allows the presentation of indices for extensive examination and scrutiny of activities that exceed some fixed proportion and govern decisions on their advancement, continuation and termination, regardless of the size of the organization.
9. Evaluations remain unbroken since individuals transfer between groups with their own profit and loss statements and balance sheets intact.
10. Individuals belonging to different groups may be evaluated according to equivalent criteria.

## Claims

1. An evaluation method using computers to evaluate individuals that are constituent members of an organization and/or groups comprising one or more individuals that are constituent members of the organization by rendering the internally and externally directed activities of the organization as billables, comprising:
steps in which the internally and externally directed activities of the organization are quantified by their rendition as billables and the resulting values stored in one or more databases; and
steps in which individuals that are constituent members of the organization and/or groups comprising one or more individuals that are constituent members of the organization are evaluated on the basis of the values thus accumulated in the databases.

2. An evaluation method using computers to evaluate individuals that are constituent members of an organization and/or groups comprising one or more individuals that are constituent members of the organization by applying tools of accounting to the internally and externally directed activities of the organization, comprising:
steps in which the internally and externally directed activities of the organization are quantified by the application of tools of accounting and the resulting values stored in one or more databases; and
steps in which individuals that are constituent members of the organization and/or groups comprising one or more individuals that are constituent members of the organization are evaluated on the basis of the values thus accumulated in the databases.

3. An evaluation method using computers to evaluate individuals that are constituent members of an organization and/or groups comprising one or more individuals that are constituent members of the organization by applying tools of accounting to the internally and externally directed activities of the organization, comprising:
storage in one or more databases of profit and loss statement data and/or balance sheet data representing particular and discrete individuals and/or groups within the organization;
steps in which either or both of the profit and loss statement and balance sheet data sets are used to establish individualized accounts, each representing a particular individual or group, and the internally and externally directed activities of the organization are reflected in accounts in the database as billables or as accounting transactions;
steps in which income and/or expenditure generated and/or incurred by individuals and/or groups is at that time reflected in the individualized accounts in the databases; and
steps in which the individual and/or group profit and loss statement data and/or balance sheet data calculated in the above steps are used to evaluate individuals and/or groups.

4. An evaluation system applying tools of accounting to the internally and externally directed activities of an organization and evaluating, on the basis of the processing output of a computer system, individuals that are constituent members of the organization and/or groups comprising one or more individuals that are constituent members of the organization, comprising:
the computer system provided with means of computation that performs the accounting calculations on the internally and externally directed activities of the organization in the accounts of the individuals that are constituent members of an organization and/or groups comprising one or more individuals that are constituent members of the organization and evaluates the individuals and/or groups on the basis of the calculated output of their profit and loss and their assets and liabilities.

5. The system of evaluation of claim 4, further comprising:
the computer system provided with means of computation that calculates the profit and loss and the assets and liabilities of an individual on the basis of input data when the results of the quantification of the activities of an individual that is a constituent member of the group are provided to the computer system as input; and
takes as input the profit and loss and assets and liabilities of individuals calculated by the means of computation and inter-relatedly calculates from that input the profit and loss and the assets and liabilities of the group to which each individual belongs and the profit and loss and the assets and liabilities of the higher-order groups to which each group belongs, and is provided with means of updating that updates these calculations of profit and loss and of assets and liabilities.

6. The system of evaluation of claim 5, further comprising:
the means of updating arranged to distinguish between individuals and groups by means of their attributes and, where groups exist in a hierarchical structure, arranged to update the relationships between individuals and groups and between lower-order groups and higher-order groups by modifying the attributes that define the hierarchical relationship of individuals and groups and/or the attributes that define the hierarchical relationship of groups.

7. An evaluation system to evaluate, on the basis of the processing output of a computer system, individuals that are constituent members of an organization and/or groups comprising one or more individuals that are constituent members of the organization by rendering the internally and externally directed activities of the organization as billables, comprising:
quantification by the computer system of the internally and externally directed organizational activities of the individuals that are constituent members of the organization and/or groups comprising one or more individuals that are constituent members of the organization and determination by the computer system of the remuneration of those individuals on the basis of that output.

8. An evaluation system that applies tools of accounting to the internally and externally directed activities of an organization and evaluates, on the basis of the processing output of a computer system, individuals that are constituent members of the organization and/or groups comprising one or more individuals that are constituent members of the organization, comprising:
the computer system performing the accounting calculations on the internally and externally directed activities of the organization in the accounts of the individuals that are constituent members of the organization and/or groups comprising one or more individuals that are constituent members of the organization and determining the remuneration of those individuals on the basis of the profit and loss and the assets and liabilities of the individuals and/or the groups thus calculated.

9. An evaluation system to evaluate, on the basis of the processing output of a computer system, individuals that are constituent members of an organization and/or groups comprising one or more individuals that are constituent members of the organization by rendering the internally and externally directed activities of the organization as billables, comprising:
quantification by the computer system of the internally and externally directed activities of the evaluation of the individuals that are constituent members of the organization and/or groups comprising one or more individuals that are constituent members of the organization and determination of the retirement and/or severance pay of those individuals on the basis of that output.

10. An evaluation system that applies tools of accounting to the internally and externally directed activities of an organization and evaluates, on the basis of the processing output of a computer system, individuals that are constituent members of the organization and/or groups comprising one or more individuals that are constituent members of the organization, comprising:
the computer system performing the accounting calculations on the internally and externally directed activities of the organization in the accounts of the individuals that are constituent members of the organization and/or groups comprising one or more individuals that are constituent members of the organization and determining as retirement and/or severance pay of those individuals on the basis of the profit and loss and the assets and liabilities of the individuals and/or the groups thus calculated.

11. The system of evaluation of claim 4, further comprising:
the computer system arranged to maintain the logical structure of contractual relationships between individuals that are constituent members of the organization and/or groups comprising one or more individuals that are constituent members of the organization and to automatically perform calculations on the basis of those contractual relationships when applying tools of accounting.

12. An evaluation system that applies tools of accounting to the internally and externally directed activities of an organization and evaluates, on the basis of the processing output of a computer system, individuals that are constituent members of the organization and/or groups comprising one or more individuals that are constituent members of the organization, comprising:
the computer system provided with one or more databases that define account entries for internal transactions that determine the treatment of transactions within the organization and account entries for external transactions that use financial accounting and/or tax accounting;
the computer system provided with means of reflecting internal and external transactions of the organization in the internal transaction account entries and the external transaction account entries;
the computer system provided with means of calculating profit and loss statements and/or balance sheets of the individuals and/or groups within the organization; and
the computer system provided with means of evaluating individuals and/or groups on the basis of the output of the above means.

13. A system that uses any one of the systems of evaluation of Claims 4 through 12 to manage the profit and loss of individuals that are constituent members of an organization and/or groups comprising one or more individuals that are constituent members of the organization.
